# EUROPEAN PATENT APPLICATION

(11) **EP 2 420 944 A1**
(43) Date of publication of application: **22.02.2012**
(21) Application number: 11006657.8
(22) Date of filing: 12.08.2011
(51) Int. Cl.: G06F 17/30

(54) **Smart web service discovery**

(30) Priority: 20.08.2010 US 860643
(71) Applicant: SAP AG, 69190 Walldorf (DE)
(72) Inventor: Perez, Ido, Dietmar-Hopp-Allee 16 (DE); Amit, Maya, Dietmar-Hopp-Allee 16 (DE); Zmiri-Yaniv, Michal, Dietmar-Hopp-Allee 16 (DE)
(74) Representative: Müller-Boré & Partner Patentanwälte

(57) **Abstract**

The present disclosure involves software and computer implemented methods for smart discovery of web services. One process includes operations for identifying a modeled service composition at design time in an integrated development environment (IDE), receiving a selection of an input/output of a first service included within the modeled service composition, collecting a set of information associated with the first service and the selected input/output, searching at least one service repository for a set of services associated with the selected input/output based at least in part on the collected set of information associated with the first service and the selected input/output, presenting at least a portion of the set of services responsive to the search, receiving a selection of a second service from the presented set of services, and integrating the selected second service into the modeled service composition.

## Description

### TECHNICAL FIELD

The present disclosure relates to software, computer systems, and computer implemented methods for providing smart discovery of web services in an integrated development environment (IDE).

### BACKGROUND

Application developers and programmers use various tools, systems, and methods to generate applications, programs, and interfaces. Generally, applications are developed in one of a plurality of development technology platforms, including Microsoft's .NET, Sun System's Java, or other suitable programming languages and development environments. In order to ease the creation of application, processes, and other portions of software, developers employ integrated development environments (IDEs). IDEs are designed to maximize programmer and developer productivity by providing connections between software components and user interfaces (Uls), as well as allowing programming to be performed in a visual manner, while moving at least some of the underlying coding to an automatic process. Some IDEs are associated with a specific programming language, so as to provide a feature set which more closely matches the programming requirements, syntax, and operations of the specific programming language, while other IDEs may be used with multiple programming languages.

In order to identify the best components for use in a new application or component, developers must have familiarity with a vast amount of previously developed components, as well as the locations in which those components are located. In general, it becomes a difficult task to correctly identify or choose a component that adequately performs the necessary tasks, particularly when the truly best component is not known or locally available to the developer. Further, some applications may include operations that require a combination of more than one component in order to perform adequately, requiring developers to chain two or more components, as well as their corresponding inputs and outputs, together to form a combined new component. Current systems fail to provide developers with a convenient method of identifying and combining multiple components for use in an application.

### SUMMARY

The present disclosure involves software, computer program products, computer systems, and computer implemented methods for smart discovery of web services. Examples are given in the following text. It should be understood that various modifications to the examples may be made. In particular, elements of one example may be combined and used in other examples to form new examples.

One aspect includes operations for identifying a modeled service composition at design time in an integrated development environment (IDE), where the operations may comprise receiving a selection of an input/output of a first service included within the modeled service composition, collecting a set of information associated with the first service and the selected input/output, searching at least one service repository for a set of services associated with the selected input/output based at least in part on the collected set of information associated with the first service and the selected input/output, presenting at least a portion of the set of services responsive to the search, receiving a selection of a second service from the presented set of services, and integrating the selected second service into the modeled service composition.

Accordingly, collecting the set of information associated with the first service and the selected input or output of the first service may comprise analyzing the modeled service composition for metadata associated with the first service. The collecting may further comprise analyzing the modeled service composition for metadata associated with at least one other service included within the modeled service composition. Collecting the set of information may further comprise collecting a further set of information comprising a context associated with the modeled service composition.

Also, searching at least one service repository for the set of services associated with the selected input or output of the first service may comprise generating a service search query based at least in part on a combination of two or more of the following: the collected set of information associated with the selected input or output of the first service, the metadata associated with the first service, the metadata associated with at least one other service in the modeled service composition, and the collected set of context information associated with the modeled service composition.

Moreover, the context associated with the modeled service composition may include one or more of the following: information associated with a user interacting with the modeled service composition, information on at least one application associated with the modeled service composition, at least one other service composition related to the modeled service composition, information on an industry associated with the modeled service composition, and feedback associated with the modeled service composition received from a community-based feedback system.

In addition, the metadata associated with the first service may include one or more of the following: information on usage of the first service in at least one other service composition, a community rating associated with the first service received from a community-based feedback system, information on usage of the first service in combination with at least one other service, and information associated with at least one non-selected input or output of the first service.

Furthermore, searching the at least one service repository for the set of services associated with the selected input or output of the first service may comprise generating a service search query based at least in part on the collected set of information associated with the first service and the selected input or output of the first service. Searching the at least one service repository may also comprise dynamically determining at least one service repository associated with the generated service search query. Searching the at least one service repository may further comprise executing the generated service search query against the at least one determined service repository.

Also, searching at least one service repository for the set of services associated with the selected input or output of the first service may further comprise identifying a set of services responsive to the generated service search query from the at least one determined service repository. Searching the at least one service repository may further include ranking each service of the identified set of services relative to the other services of the identified set of services based on at least one criteria associated the first service and the selected input or output of the first service.

Moreover, presenting at least a portion of the set of services responsive to the search via the GUI associated with the IDE may comprise identifying the highest ranked service in the identified set of services. Presenting at least a portion of the set of services may also include presenting the highest ranked service within an augmented version of the modeled service composition, where the augmented version of the modeled service composition includes at least one connection from the selected input or output of the first service to a corresponding input or output of the highest ranked service.

Also, receiving the selection of the second service from the presented set of services for integration into the modeled service composition may comprise receiving a selection confirmation associated with the presented highest ranked service. In addition, integrating the selected second service into the modeled service composition may comprise automatically updating program code associated with the modeled service composition to correspond to the augmented version of the modeled service composition.

Moreover, the method may further comprise identifying a second highest ranked service in the identified set of services in response to receiving a request for an alternative search result. The method may also comprise presenting the second highest ranked service within a second augmented version of the modeled service composition, where the second augmented version of the modeled service composition includes at least one connection from the selected input or output of the first service to a corresponding input or output of the second highest ranked service.

In addition, the generated service search query may comprise a semantic-based service search query and the at least one determined service repository comprises a resource description framework (RDF) database.

Furthermore, each service may comprise a single service or a combination of two or more services.

According to another aspect, a computer program product encoded on a tangible storage medium is provided. The product comprises computer readable instructions for causing one or more processors to perform operations. The operations may comprise identifying a modeled service composition at design time in an integrated development environment (IDE), where the modeled service composition includes at least one service. The operations may further comprise receiving a selection of an input or output of a first service included within the modeled service composition. The operations may further comprise collecting a set of information associated with the first service and the selected input or output of the first service. The operations may further comprise searching at least one service repository for a set of services associated with the selected input or output of the first service, the search based at least in part on the collected set of information associated with the first service and the selected input or output of the first service. The operations may further comprise presenting at least a portion of the set of services responsive to the search via a graphical user interface (GUI) associated with the IDE. The operations may further comprise receiving a selection of a second service from the presented set of services for integration into the modeled service composition. The operations may further comprise integrating the selected second service into the modeled service composition.

According to a further aspect, a computer implemented method performed by one or more processors for automatically discovering at least one service for integration with a service composition is provided. The method may comprise identifying a modeled service composition at design time in an integrated development environment (IDE), where the modeled service composition includes at least one service. The method may further comprise receiving a selection of a first service included within the modeled service composition. The method may further comprise collecting a set of information associated with the first service. The method may further comprise searching at least one service repository for a set of services associated with the selected first service, the search based at least in part on the collected set of information associated with the first service. The method may further comprise presenting at least a portion of the set of services responsive to the search via a graphical user interface (GUI) associated with the IDE.

Receiving the selection of the first service may comprise receiving a selection of an input or output of the first service. Also, collecting the ser of information associated with the first service may include collecting the selected input or output of the first service. Moreover, searching the at least one service repository for the set of services associated with the selected first service may include searching the at least one service repository for a set of services associated with the selected first service and the selected input or output of the first service, wherein the search is based at least in part on the selected input or output of the first service. The method may further comprise receiving a selection of a second service from the presented set of services, and integrating the selected second service into the modeled service composition.

Collecting the set of information associated with the first service may comprise analyzing the modeled service composition for metadata associated with the first service. Collecting the set of information associated with the first service may also comprise analyzing the modeled service composition for metadata associated with at least one other service included within the modeled service composition. Collecting the set of information associated with the first service may also comprise collecting a set of information comprising a context associated with the modeled service composition.

Furthermore, searching at least one service repository for a set of services may comprise generating a service search query based at least in part on a combination of two or more of the following: metadata associated with the first service, metadata associated with at least one other service in the modeled service composition, and the collected set of context information associated with the modeled service composition.

Also, searching the at least one service repository for the set of services associated with the first service may comprise generating a service search query based at least in part on the collected set of information associated with the first service. Searching the at least one service repository for the set of services may also comprise dynamically determining at least one service repository associated with the generated service search query. The searching may further comprise identifying a set of services responsive to the generated service search query from the at least one determined service repository.

Moreover, presenting at least a portion of the set of services responsive to the search via the GUI associated with the IDE may comprise ranking each service of the identified set of services relative to the other services of the identified set of services based on at least a community rating associated with each service received from a community-based feedback system. Presenting at least a portion of the set of services may also comprise presenting a predefined number of the identified set of services in descending order based on a relative ranking of each service.

In addition, the method may further comprise receiving a selection of a second service from the presented set of services for integration into the modeled service composition, where receiving the selection of the second service from the presented set of services for integration into the modeled service composition comprises receiving a selection of one of the presented set of services. The method may also comprise integrating the selected second service into the modeled service composition. Integrating the selected second service into the modeled service composition may comprise adding the selected second service to the modeled service composition to create an augmented version of the modeled service composition, including at least one connection between an input or output of at least one service within the modeled service composition and at least one input or output of the selected second service. Integrating the selected second service into the modeled service composition may also comprise automatically updating program code associated with the modeled service composition to correspond to the augmented version of the modeled service composition.

Each service may comprise a single service or a combination of two or more services.

According to another aspect, a computer program product encoded on a tangible storage medium is provided. The product may comprise computer readable instructions for causing one or more processors to perform operations. The operations may comprise identifying a modeled service composition at design time in an integrated development environment (IDE), where the modeled service composition includes at least one service. The operations may further comprise receiving a selection of a first service included within the modeled service composition. The operations may further comprise collecting a set of information associated with the first service. The operations may further comprise searching at least one service repository for a set of services associated with the selected first service, the search based at least in part on the collected set of information associated with the first service. The operations may further comprise presenting at least a portion of the set of services responsive to the search via a graphical user interface (GUI) associated with the IDE.

While generally described as computer implemented software embodied on tangible media that processes and transforms the respective data, some or all of the aspects may be computer implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGURE 1 illustrates an example environment for implementing various features of a integrated development environment (IDE) for discovery and editing of one or more services and service compositions associated with an application.

FIGURE 2 is a flowchart of an example process for providing smart searches for services and service compositions based, at least in part, on community ratings associated with a set of services using a suitable system, such as the system described in FIGURE 1.

FIGURE 3 is a flowchart of an example process for editing a particular service composition using an auto-suggestion operation based on an input and/or output included in the service composition using a suitable system, such as the system described in FIGURE 1.

FIGURE 4 is a flowchart of an example process for discovering one or more services associated with a selected service within a particular service composition based on a plurality of factors using a suitable system, such as the system described in FIGURE 1.

FIGURES 5A-G illustrate example screenshots and visual transitions associated with the processes of FIGURES 1-4 and various user interactions with the IDE as described in the present disclosure.

### DETAILED DESCRIPTION

In the following text, a detailed description of examples will be given with reference to the drawings. It should be understood that various modifications to the examples may be made. In particular, elements of one example may be combined and used in other examples to form new examples.

This disclosure generally describes computer systems, software, and computer implemented methods for providing various tools and advanced functionality to an integrated development environment (IDE), and more specifically, an IDE in which searches for and edits to services and service compositions are performed. The present disclosure provides tools and processes for allowing developers working with an IDE to easily, quickly, and efficiently locate, modify, and create services and service compositions that best support the actions and operations associated with an application under development.

In particular, the present disclosure provides three related tools for easing the consumption of web services and other application building blocks by developers. These three tools include a smart search tool, a service composition editor tool with automatic suggestions for matching services and/or service compositions, and a smart discovery tool for matching services to the context of an application or service composition under development. The smart search tool enables developers to search for a service not only by the name of the services, but by using various search parameters, such as expected and/or required inputs and outputs, service quality, such as the security level of the service and the availability of the service), the pricing of the service, and a community rating or usage, among others. The results of the smart search can return a list including services, service compositions, or a combination of both. As described herein, service compositions are a set of two or more services combined into a single composition, and used in a manner similar to a service. Some service compositions may be predefined and stored in service repositories in a similar manner to individual services, while some other service compositions may be dynamically generated in response to the requirements and criteria of the search entered by the developer, including the inputs and outputs defined by the search. The search results may match some or all of the search parameters and criteria identified by the developer. In some instances, only a portion of the identified search parameters and criteria may be available within the services and/or service compositions returned by the smart search. In those instances, as well as instances where all of the identified search parameters are met, each of the search results of the smart search can be provided a ranking calculating the degree of matching associated with the underlying search parameters. In some instances, the ranking may also incorporate and/or take into consideration a set of ratings for one or more of the services and/or service compositions provided by one or more of a community of developers. In some instances, the community of developers may include individuals within a single entity, while in other instances, the community of developers may include individuals (and/or entities) from various locations, including different entities, companies, industries, and/or job types or roles. Individuals within the community of developers can provide feedback on the one or more services, including providing the aforementioned rating. The rating can be used to provide additional information to the search results and the ranking associated with each responsive service and/or service composition, providing search results incorporating the community's ratings and usage of particular services and service compositions when calculating the search results. Additionally, when a service or service composition is selected by the developer from the search results, that selection can be included in or added to information related to the selected service or service composition (as well as the non-selected services and/or service compositions) for use in later determinations and rankings of search results. The more a particular service or service composition is selected, the higher the corresponding ranking. In some instances, the effect of previous selections or non-selections may be increased or decreased based on whether the developer associated with the previous selection is related to the developer associated with the search results, such as by association in a particular entity, industry, or job role.

The service composition editor tool with automatic suggestions for matching services and/or service compositions allows a developer to edit a service composition in a graphical editor within the IDE. Specifically, the service composition editor tool allows services or service compositions to be added to a particular service composition, as well as the removal or modification of the services included within the particular service composition. For example, the developer can add services to a particular service composition and provide mappings between the inputs and outputs of the newly added services and the services included within the original service composition. The service composition editor tool may automatically generate proxies for each of the services in the created service composition, as well as a class that reflects the specific flow of the service composition. Further, the service composition editor includes an automatic suggestion tool for suggesting one or more services for connection to a particular input or output of a selected service within the service composition being edited. In one instance, by mousing over an input of a service within the service composition being edited, one or more suggested services and/or service compositions may be presented whose respective outputs could be connected to the moused over service input and added to the service composition being edited. Similarly, by mousing over an output of a service within the service composition, one or more suggested services and/or service compositions may be presented whose respective inputs could be connected to the moused over service output. One of the suggested services or service compositions suggested as a match may be selected and easily added to the service composition through a developer action, such as by activating an "accept" button or other UI element associated with the suggested addition. The auto-suggestion feature can provide developers with assistance in expanding a particular service composition to find a service or set of services related to a selected service input or output. Additionally, the auto-suggest feature allows a developer to easily explore potential and suggested additions to a previously edited or generated service composition without requiring the developer to leave the graphical user interface associated with the IDE. The auto-suggestion feature in the service composition editor tool can use any suitable algorithm to determine the one or more suggested services or service compositions to return to the developer, including the particular input or output selected, metadata associated with the associated service, service composition, or associated application, as well as information associated with the developer. In still other instances, the suggested services or service compositions may be based upon information provided by a set of community rankings similar to those of the smart search tool.

The third tool in the present disclosure is the smart discovery tool for matching services to the context of an application or service composition being edited or developed. In some instances, the smart discovery tool may be part of the service composition editor tool, similar to the auto-suggestion functionality. The smart discovery tool allows the developer to select, or focus upon, a particular service within a service composition, and based on the particular selected service, search for related or matching services associated with the selected service's context. The smart discovery tool algorithm can recommend services and service compositions associated with the selected service based on any number of factors, including services and/or service compositions used by members of a particular community when the selected service is used. For example, in a healthcare-related service composition, services typically used by other community members working on healthcare-related services may be returned as suggestions for inclusion into the service composition, with a particular focus on services and service compositions associated with the selected service. In some instances, the suggested service and/or service composition may not be directly connected (via inputs and outputs) to the selected service, but may instead be commonly used in service compositions where the selected service is used. Considerations for the smart discovery tool's suggested services may include the context of the underlying application, other services included in the service composition, and developer-related information, among others.

In general, the present solution allows developers to be familiar with and/or provided information on services relevant and/or related to service compositions currently being edited or developed. For example, the developer may begin editing a single service and continue further service composition development based on suggestions provided by the auto-suggestion tool within the service composition editor. If the auto-suggested services do not meet the needs of the developer, services suggested by the smart discovery tool may be considered and added to the service composition. If those suggested services also fail to satisfy the developer's needs, the smart search tool can be used to define a specific set of service parameters for inclusion in a service search. As understood, any combination of the three tools may be used in order to provide for successful editing and development of service compositions. Still further, each of the tools may be provided entirely within the IDE, allowing the developer to continue working within the IDE without using a web browser or other tool external to the IDE to locate additional and suggested services and service compositions. In general, the suggested services and search results may be based at least partially on a set of community-based knowledge, including explicit feedback provided by other members of the community for a specific service or service composition, as well as on implicit feedback related to the related usage of various services in connection with one another, or in certain implementations, environments, or scenarios. Additionally, whenever a developer uses one of the suggested services or service compositions described herein, a set of information associated with that service's usage, including the application and service composition context in which the service was implemented, can be submitted to the set of community-based knowledge, and used to determine and rank later suggestions and search results.

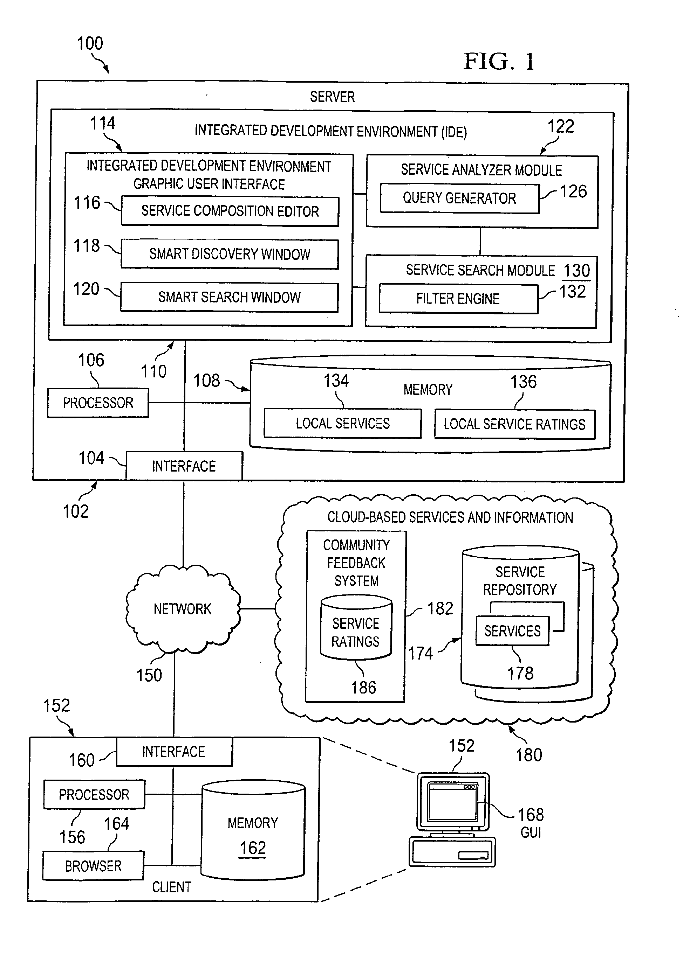

FIGURE 1 illustrates an example environment 100 implementing various features of an integrated development environment (IDE) for the discovery and editing of one or more services and service compositions associated with an application. The illustrated environment 100 includes, or is communicably coupled with, a development server 102, one or more clients 152, and a set of cloud-based services and information 180, at least some of which communicate across or via network 150. In general, environment 100 depicts an example configuration of a system capable of identifying and editing services and service compositions, as well as automatically suggesting one or more services for inclusion with a particular service composition. The environment 100 also supports one or more additional servers operable to provide concurrent or similar functionality as provided by server 102, as well as a plurality of clients 152 associated with one or more servers 102. Further, the set of cloud-based services and information 180 is represented in FIGURE 1 as elements within a cloud computing network, from which both the client 152 and server 102 may access information. In alternative implementations, the elements illustrated within the set of cloud-based services and information 180 may instead be associated with specific servers, clients, or other locations, as opposed to the general cloud computer network illustrated herein.

In general, server 102 is any server that stores and executes an integrated development environment (IDE) application 110 used by developers and other users to create and develop applications, specifically by identifying, editing, and expanding on services and service compositions associated with the developer applications. For example, server 102 may be a Java 2 Platform, Enterprise Edition (J2EE)-compliant application server that includes Java technologies such as Enterprise JavaBeans (EJB), J2EE Connector Architecture (JCA), Java Messaging Service (JMS), Java Naming and Directory Interface (JNDI), and Java Database Connectivity (JDBC). In some instances, the server 102 may store a plurality of various other applications, while in other instances, the server 102 may be a dedicated server meant to store and execute only the IDE 110 and its related functionality. In some instances, the server 102 may comprise a web server or be communicably coupled with a web server, where the IDE 110 represents one or more web-based development applications accessed and executed via network 150 by the clients 152 of the system to perform the programmed tasks or operations of the IDE 110.

At a high level, the server 102 comprises an electronic computing device operable to receive, transmit, process, store, or manage data and information associated with the environment 100. The server 102 illustrated in FIGURE 1 can be responsible for receiving application requests from one or more client applications or browsers 164, as well as business applications associated with the clients 152 of environment 100 and specifically designed to interact with the IDE 110, responding to the received requests by processing said requests in the associated IDE 110, and sending the appropriate responses from the IDE 110 back to the requesting client application or browser 164. Alternatively, the IDE 110 can be capable of processing and responding to local requests from a user accessing server 102 locally. Accordingly, in addition to requests from the external clients 152 illustrated in FIGURE 1, requests associated with the IDE 110 may also be sent from internal users, external or third-party customers, and other automated applications, as well as any other appropriate entities, individuals, systems, or computers. Further, the terms "client application" and "business application" may be used interchangeably as appropriate without departing from the scope of this disclosure. Additionally, a web browser, including a web browser associated with a mobile device, may in some instances be used as a web-based client application, and thus used interchangeably therewith.

As used in the present disclosure, the term "computer" is intended to encompass any suitable processing device. For example, although FIGURE 1 illustrates a single server 102, environment 100 can be implemented using two or more servers 102, as well as computers other than servers, including a server pool. Indeed, server 102 may be any computer or processing device such as, for example, a blade server, general-purpose personal computer (PC), Macintosh, workstation, UNIX-based workstation, or any other suitable device. In other words, the present disclosure contemplates computers other than general purpose computers, as well as computers without conventional operating systems. Further, illustrated server 102 may be adapted to execute any operating system, including Linux, UNIX, Windows, Mac OS, or any other suitable operating system. According to one implementation, server 102 may also include or be communicably coupled with a mail server.

In the illustrated implementation, and as shown in FIGURE 1, the server 102 includes a processor 106, an interface 104, a memory 108, and an IDE 110. The interface 104 is used by the server 102 to communicate with other systems in a client-server or other distributed environment (including within environment 100) connected to the network 150 (*e.g.,* client 152, as well as other systems communicably coupled to the network 150). FIGURE 1 depicts both a server-client environment, as well as a cloud computing network. Various other implementations of the illustrated environment 100 can be provided to allow for application and service composition development and access to the IDE 110 and its associated functionality, including by accessing the server 102 as a node or location within a cloud computing network. Alternatively, the IDE 110 may be provided or accessed locally at a computer. Generally, the interface 104 comprises logic encoded in software and/or hardware in a suitable combination and operable to communicate with the network 150. More specifically, the interface 104 may comprise software supporting one or more communication protocols associated with communications such that the network 150 or interface's hardware is operable to communicate physical signals within and outside of the illustrated environment 100.

Although not illustrated in FIGURE 1, in some implementations the server 102 may also include a user interface, such as a graphical user interface (GUI). The server's GUI may comprise a graphical user interface operable to, for example, allow the user of the server 102 to interface with at least a portion of the platform for any suitable purpose, such as creating, preparing, requesting, or analyzing data, as well as viewing and accessing source documents associated with business transactions, applications, or service compositions under development. Generally, the GUI provides the particular user with an efficient and user-friendly presentation of business data provided by or communicated within the system. The GUI may comprise a plurality of customizable frames or views having interactive fields, pull-down lists, buttons, and other controls operated by the user. For example, the GUI may provide interactive elements that allow a user to enter, remove, modify, or select elements of an under-development application in the GUI. More generally, the GUI may also provide general interactive elements that allow a user to access and utilize various services and functions of IDE 110. Therefore, the server's GUI contemplates any suitable graphical user interface, such as a combination of a generic web browser, an IDE-specific GUI, and command line interface (CLI) that processes information in the platform and efficiently presents the results to the user visually.

Generally, example server 102 may be communicably coupled with a network 150 that facilitates wireless or wireline communications between the components of the environment 100 (*i.e*., between the server 102 and client 152 as well as between server 102 and the set of cloud-based services and information 180), as well as with any other local or remote computer, such as additional clients, servers, or other devices communicably coupled to network 150, including those not illustrated in FIGURE 1. In the illustrated environment, the network 150 is depicted as a single network in FIGURE 1, but may be comprised of more than one network without departing from the scope of this disclosure, so long as at least a portion of the network 150 may facilitate communications between senders and recipients. The network 150 may be all or a portion of an enterprise or secured network, while in another instance, at least a portion of the network 150 may represent a connection to the Internet. In some instances, a portion of the network 150 may be a virtual private network (VPN), such as, for example, the connection between the client 152 and the server 102. Further, all or a portion of the network 150 can comprise either a wireline or wireless link. Example wireless links may include 802.11 a/b/g/n, 802.20, WiMax, and/or any other appropriate wireless link. In other words, the network 150 encompasses any internal or external network, networks, sub-network, or combination thereof operable to facilitate communications between various computing components inside and outside the illustrated environment 100. The network 150 may communicate, for example, Internet Protocol (IP) packets, Frame Relay frames, Asynchronous Transfer Mode (ATM) cells, voice, video, data, and other suitable information between network addresses. The network 150 may also include one or more local area networks (LANs), radio access networks (RANs), metropolitan area networks (MANs), wide area networks (WANs), all or a portion of the Internet, and/or any other communication system or systems at one or more locations. The network 150, however, is not a required component in all implementations of the present disclosure.

As illustrated in FIGURE 1, server 102 includes a processor 106. Although illustrated as a single processor 106 in FIGURE 1, two or more processors may be used according to particular needs, desires, or particular embodiments of environment 100. Each processor 106 may be a central processing unit (CPU), a blade, an application specific integrated circuit (ASIC), a field-programmable gate array (FPGA), or another suitable component. Generally, the processor 106 executes instructions and manipulates data to perform the operations of server 102 and, specifically, the functionality associated with the IDE 110. In one implementation, the server's processor 106 executes the functionality required to receive and respond to requests and instructions from the client 152 and their respective browser or client applications 164, as well as the functionality required to perform the other operations of the IDE 110.

Regardless of the particular implementation, "software" may include computer-readable instructions, firmware, wired or programmed hardware, or any combination thereof on a tangible medium operable when executed to perform at least the processes and operations described herein. Indeed, each software component may be fully or partially written or described in any appropriate computer language including C, C++, Java, Visual Basic, assembler, Perl, any suitable version of 4GL, as well as others. It will be understood that while portions of the software illustrated in FIGURE 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components, as appropriate. In the illustrated environment 100, processor 106 executes the IDE 110 on the server 102.

At a high level, the IDE 110 is any application, program, module, process, or other software that may execute, change, delete, generate, or otherwise manage information associated with developing applications, UIs, and service compositions according to the present disclosure, particularly in response to and in connection with one or more requests received from the illustrated client 152 and their associated browser and/or client application 164. In certain cases, only one IDE 110 may be located at a particular server 102. In others, a plurality of related and/or unrelated IDEs 110 may be stored at a single server 102, or located across a plurality of other servers 102 (not illustrated in FIGURE 1), as well. Additionally, the IDE 110 may represent web-based applications accessed and executed by remote clients 152 or browsers 164 via the network 150 (e.g., through the Internet, or via the set of cloud-based services and information 180). Further, while illustrated as internal to server 102, one or more processes associated with a particular IDE 110 may be stored, referenced, or executed remotely. For example, a portion of a particular IDE 110 may be a web service associated with the IDE 110 that is remotely called, while another portion of the IDE 110 may be an interface object or agent bundled for processing at a remote client 152. Moreover, any or all of the IDE 110 may be a child or sub-module of another software module or enterprise application (not illustrated) without departing from the scope of this disclosure. Still further, portions of the IDE 110 may be executed or accessed by a user working directly at server 102, as well as remotely at client 152.

As illustrated in FIGURE 1, the IDE 110 may be a software application that provides tools and operations to computer programmers, application developers, and business users for use in software development. Example IDEs include Eclipse, Microsoft's Visual Studio, and SAP's NetWeaver, among others. In some instances, the IDE 110 may include a source code editor, a compiler and/or an interpreter, a debugger, and various other tools for developing UIs, service compositions (via a graphical interface), and other applications or portions of applications. In some instances, the IDE 110 may be associated with a specific programming technology (e.g., Java), while in other instances, the IDE 110 may be capable of interacting and creating applications and UIs using two or more programming technologies. As specifically illustrated in FIGURE 1, the IDE 110 may include an IDE GUI module 114, a service analyzer module 122, and a service search module 130. Although only these three modules are illustrated within the IDE 110 in FIGURE 1, the IDE 110 may be combined with or include any number of additional modules and components for performing various types of additional operations within the IDE 110. Further, some or all of the illustrated components may be embedded within or included as part of the underlying functionality of the IDE 110, and may not be a specific component within the IDE 110 in some instances. Additionally, two or more of the illustrated components may be combined into a single module or embedded element of the IDE 110. Further, in some implementations, some or all of the operations associated with the various illustrated modules may be, at least in part, executed or performed external to the IDE 110, and in some instances, the server 102 itself. In other implementations, only a portion of the functionality may be performed by the system, while in others, different or additional functionality may be included. In some instances, each module may be a plug-in added to an underlying software application containing the specific functionality as needed by the developer or business user, or provided by the associated information technology administrator.

The IDE GUI module 114 provides a graphical tool allowing developers and business users to create, edit, and locate service compositions of varying complexity within the IDE 110. The IDE GUI module 114 can be used to provide a graphical tool for editing previously generated service compositions, generating new service compositions, and searching for and/or identifying services and service compositions matching one or more criteria or parameters. In some instances, a particular service composition may, at least initially, comprise a single service, while in other instances, another service composition may combine the inputs and outputs of a plurality of services to create a complex service composition for performing one or more operations based on defined inputs and, after execution, providing one or more outputs. Generally, the IDE GUI module 114 may provide a selection of tools and methods for generating visual representations of and relationships of services within a service composition. In some instances, a particular service composition may be related to one or more other service compositions, and may be combined within an application utilizing various portions of the service compositions. Additionally, one or more UIs may be generated or used within the underlying application to receive inputs for and present outputs from the service compositions. The IDE 110 may provide additional tools for generating one or more UIs integrating one or more of the services and/or service compositions as created or modified using the tools and operations of the present disclosure.

As illustrated in FIGURE 1, the IDE GUI module 114 includes a service composition editor window 116, a smart discovery window 118, and a smart search window 120. The windows included within the IDE GUI module 114 represent three windows for presenting and editing service compositions, for searching and identifying relevant services and service compositions, as well as for generally interacting with the IDE 110. The service composition editor window 116 provides a GUI-based window for viewing, modifying, and interacting with service compositions. In some instances, at least a portion of the information associated with the smart discovery window 118 and the smart search window 120 may be included within or presented within the confines of the service composition editor window 116. For example, search results (i.e., particular services and service compositions) returned using the search functionality of the smart search window 120 may be dragged-and-dropped into the service composition editor window 116 for inclusion in a service composition under development or being edited in the service composition editor window 116. In some instances, some or all of the smart discovery window 118 and/or the smart search window 120 may be embedded within the service composition editor window 116. In general, developers can interact with a graphical model of a service composition within the service composition editor window 116 in order to modify the connections between one or more inputs and outputs of services within a service composition, while also adding, editing, or deleting the services included in a particular service composition. In some instances, these operations may be associated with information presented in either or both of the smart discovery window 118 and the smart search window 120.

The smart search window 120 can be associated with a service search query designer, and can allow developers to specify one or more service parameters to be associated with a set of returned services and/or service compositions. The smart search window 120 can allow developers to specify information on any number of parameters, including a service or service composition's name or description, one or more inputs and outputs, a service quality rating (*i.e*., standard availability of a service, the speed of execution of a service, the security level of a service), service pricing (e.g., per service or use), and information provided by or associated with a community of developers related to the service or service composition. By defining specific criteria and service parameters, a specific subset of available services and/or service compositions can be identified. Once the search is entered in the smart search window 120, a set of one or more search results (i.e., responsive services and service compositions) can be returned within the smart search window 120. Search results presented in the smart search window 120 can be dragged-and-dropped into the service composition editor window 116 to allow for the associated service and/or service composition to be added to the graphical illustration of and incorporated into the current service composition.

The smart discovery window 118 may be used to present one or more services and/or service compositions related to a particular service selected within the service composition editor window 116. When activated, the smart discovery window 118 may present results associated with a search query initialized based on the selection of a particular service within a service composition presented within the service composition editor window 116. For example, when a particular service is focused upon, or selected, a service search query may be generated to define services and service compositions related to the focused service, and, in some instances, to the context in which the focused service exists. For example, if a "GetSalesItem" service is focused upon, the search associated with the smart discovery window 118 may attempt to locate other services or service compositions that are commonly used with the "GetSalesItem" service. In some instances, the search may consider information, such as a service rating, provided by members of a community related to the current developer. Additionally, the search may identify particular industries, use-cases, or other criteria associated with the focused service. The services and service compositions responsive to the search can then be returned in the smart discovery window 118. One or more of those services and service compositions can then be dragged-and-dropped, or otherwise added, to the service composition being edited within the service composition editor window 116.

In some instances, the service composition editor window 116 may provide suggested services and service compositions to connect to specific inputs and outputs of the service composition included within the window 116. By focusing on a particular service's input or output (e.g, using a mouse over or click gesture), a search for one or more services or service compositions with an input or output corresponding to the selected input or output can be generated. In some instances, the search results may be presented directly within the service composition editor window 116 by providing an augmented service composition illustrating the suggested service or service composition as connected to the selected input or output. In some instances, the developer can then scroll through the various automatic suggestions to determine if any of the additions should be included within the service composition. In some instances (not shown in FIGURE 1), the automatic suggestions may be presented in a separate window from the service composition editor window 116.

The IDE 110 also includes a service analyzer module 122. The service analyzer module 122 is used during design time to analyze the service composition, the services included within the service composition, the inputs and outputs of each service in the service composition, and the connections between the included services, in order to determine a set of suggested services and/or service compositions to be suggested for use with the designed service composition. The service analyzer module 122 analyzes a modeled service composition to identify various elements associated therewith, including the inputs and outputs associated with the service composition as a whole, each of the individual services, and the connections between the various services. In some instances, the service analyzer module 122 can focus its analysis on a particular service within the service composition to provide an analysis on a specific service.

Additionally, the service analyzer module 122 can analyze the additional context of the service composition and/or the service composition's associated application or developer to determine additional information associated with the service composition. For example, the service analyzer module 122 can determine, among other information, the role of the developer working on the service composition, previous service compositions and services used by the developer, an industry associated with the service composition, one or more applications associated with the service composition (either to the current instance of the service composition, or to other instances of the service composition), related service compositions, information from one or more UIs associated with the service composition, and information - such as ratings, usage frequency, or other data - from a community of developers related to the service composition and/or one or more of the services therein. Any other relevant information may also be gathered or derived by the service analyzer module 122 in order to compile a context associated with the service composition.

As illustrated, the service analyzer module 122 includes a query generator module 126. The query generator module 126 can parse the information retrieved by the service analyzer module 122, including the context of the service and/or service composition, and use that information to generate at least one search query to be executed against one or more service repositories or directories within or external to the illustrated environment 100. The queries generated may be in any suitable format, including a structured query language (SQL). In one example, the query may be generated for execution against a resource description framework (RDF) database. An RDF database uses an RDF data model to describe, represent, and map resources, such as hypertext markup language (HTML) documents, web service description language (WSDL) documents, XML documents, and uniform resource identifiers (URI), among others, with statements in the form of subject-predicate-object expressions (also known as "triples" in RDF terminology). The RDF data model provides a semantic description of resources, services, and other information stored within the RDF database. For example, a WSDL directory or database could have a terminology that describes what a web service does, as well as what inputs and outputs it has. Several example triples may include:
- [0058] ServiceA [subject] is a [predicate] WebService [object];
- [0059] ServiceA [subject] has an [predicate] InputMessage [object];
- [0060] InputX [subject] is a [predicate] InputMessage [object].

The RDF database includes various triples such as those described above, and may use a resource mapper to generate a graph database, in which the triples describing a particular resource are connected to each other. The mapping of various resources can be performed offline or at runtime.

Where a database associated with the query generator module 126 is an RDF database, the query generator module 126 can generate at least one of its queries in an RDF-compliant query language, such as SPARQL. The query generator module 126 may itself generate the SPARQL query, while in other instances, the query generator module 126 may pass a set of query parameters developed by the query generator module 126 to a SPARQL web service or other query conversion engine to translate the set of query parameters into an RDF-compliant SPARQL query. The SPARQL query may then be provided to the service search module 130 in order to execute the query against the RDF database.

In addition to RDF databases storing service information, one or more additional non-RDF databases, repositories, or directories may also be searched by the components of the IDE 110 for services best matching the query, and by extension, the current service and/or service composition. The RDF databases and non-RDF databases, repositories, and directories may be local to server 102, such as the set or repository of local services 134 within memory 108, or remote from server 102, such as the service repository 174 located in the set of cloud-based services and information 180 and accessible by the server 102 via network 150. The non-RDF directories may include a web service metadata index, the web service metadata index comprising any file, database, or other repository that includes parameters, pointers, variables, instructions, rules, links, or other data for providing information associated with available web services. For example, a metadata index may be a UDDI-based or other enterprise registry that contains or references definitions of web services and associations to their metadata. In some embodiments, metadata indices may be formatted, stored, or defined as various data structures in XML documents, text files, Virtual Storage Access Method (VSAM) files, flat files, Btrieve files, comma-separated value (CSV) files, internal variables, one or more libraries, or any other format capable of storing or presenting web services and their respective web methods in an efficient or user friendly manner. In some instances, the web services themselves may be stored with or local to the web service metadata index, while in other instances, the web service metadata index may provide external links to the web services referenced in the registry. In still other instances, some web services may be local to the metadata index, while some web services may be external to or remote from the metadata index. The web service metadata index can generally provide information associated with and the location of the particular web service.

In some instances, the query generator module 126 may specify a particular repository or location associated with the generated queries. In other instances, the query generator module 126 may generate generic queries that can be used with any number of web service repositories, as well as queries that can be used with one or more different types of repositories or directories. In some instances, the query generator module 126 can generate multiple queries for a single service composition, allowing a plurality of repositories to be searched for matching services and service compositions associated with the corresponding service or service composition.

After queries for a particular service or service composition are generated by the query generator module 126, those queries are provided to the service search module 130 of the IDE 110. The service search module 130 may comprise a generic or service-related search engine, and can use the generated queries to identify one or more services that best satisfy the information associated with the service or service composition as analyzed and collected by the service analyzer module 122. In some instances, the service search module 130 may be specifically associated with one or more service repositories, registries, directories, or databases (including an RDF database). Additionally, the service search module 130 may also, or alternatively, search a plurality of locations storing, referencing, or that are associated with web services, so that an execution of the generated query may return one or more services that best match the queries. In some instances, the service search module 130 may combine a set of two or more services responsive to at least a portion of the query in order to return a responsive service composition. Alternatively, the service search module 130 may search one or more repositories or directories where at least one search composition is already defined. Further, the service search module 130 may dynamically determine the combination of local and remote service repositories that are to be searched by the service search module 130 based, at least in part, on one or more of the following: the generated search query, a subset of the information associated with the service composition or a selected service therein, and a subset of the context associated with the selected service. While illustrated as a module within IDE 110, the service search module 130 may be located external to and/or remote from the IDE 110. For example, the service search module 130 may be located with the illustrated community feedback system 180, or any other suitable location external to the IDE 110.

In some instances, the service search module 130 may return multiple responsive search results to the IDE 110. To handle those instances, the service search module 130 may include a filter engine 132 operable to filter the set of responsive results according to any number of suitable criteria. One example filter criteria is whether a returned result comprises a single service or a set of services combined into a service composition. In some instances, the use of a single service may be determined to be a better result than the use of a service composition comprising multiple services, and may be provided a relatively higher-ranked location within the search results and suggested services presented to the developer. In some instances, the search results may be filtered or ranked according to how closely the search results match the criteria associated with the service or service composition, including how close the match between a search result's input and/or output are with the corresponding input and/or output of the underlying service and/or service composition. The service or service composition context information may also assist in determining the positioning of certain search results. For example, if the service or service composition context provided information indicating that the service or service composition is associated with a retail event, then services and service compositions associated with retail-related events may be ranked relatively higher than services and service compositions associated with wholesale-related events. Still further, the developer associated with the underlying service or service composition may have or be associated with a particular role within the environment 100 and/or the IDE 110. Results closely associated with that role may be provided a relatively higher rating as compared to results that are not as closely associated with the role. In general, the filter engine 132 can take any number of criteria associated with the underlying service or service composition, the context of the underlying service or service composition, the developer, as well as others, in order to provide a tailored set of results best matching the query and the query's relative context. Further, the set of results may be limited to a maximum number of matching services and/or service compositions, and also may require that the returned services and service compositions meet a minimum result threshold in order to be presented.

Once the query results are returned and filtered, the service search module 130 can present the set of search results, representing a set of suggested services and/or service compositions for inclusion in or association with the underlying service or service composition, to the developer via the service composition editor window 116, the smart discovery window 118, the smart search window 120, or a combination thereof. As previously described, the set of suggested services and/or service compositions may be presented in a filtered or ranked order based, among other criteria, on the corresponding matches of the services with the underlying service or service composition, the context of the underlying service or service composition, and the particular developer. The service search module 130 may be associated with different portions of the IDE GUI 114 depending on the type of search or analysis performed, such as an automated suggestion based on a selected input or output of an individual service, a smart discovery search associated with a particular service, or a smart search associated with particular service parameters.

As stated above, the set of suggested services and/or service compositions may be presented in one portion of the IDE's display while the underlying, modeled service composition is presented in a primary portion of the display. By presenting the set of suggested services and/or service compositions concurrently with the underlying service composition, the IDE 110 can illustrate how the selection of a particular one of the set of suggested services and/or service compositions can be integrated into the underlying service composition and connected to particular services therein. Depending on the particular action being taken, the IDE 110 can generate an illustration of the modified underlying service composition (e.g., an augmented service composition) based on one or more of the suggested services. In addition to the suggested service being included in the augmented service composition, connections from the corresponding input or output of the suggested service to the corresponding input or output of the appropriate service within the service composition can be provided. Until a selection of a particular service or service composition is confirmed and the service or service composition is integrated into the service composition, the corresponding program code will not be modified. By focusing the selection onto another suggested service or service composition, the augmented underlying service composition will be recreated based on the newly-focused service or service composition.

Once a particular service or service composition is selected and confirmed to be added to the service composition, the IDE 110 may automatically modify the underlying program code associated with the service composition and its underlying application to reflect the updated version of the service composition including the new addition. In some instances, the automatic code generation may include the generation of a proxy for each service included in the updated service composition, as well as a class definition for the entire service composition reflecting, in part, the order in which the various included services are to be performed. Once the modifications and editing are complete, the updated or newly-created service composition can be stored locally, such as in the local service repository 134, or remotely, such as in one of the service repositories 174 located within the set of cloud-based services and information 180.

In general, the server 102 also includes memory 108 for storing data and program instructions. Memory 108 may include any memory or database module and may take the form of volatile or non-volatile memory including, without limitation, magnetic media, optical media, random access memory (RAM), read-only memory (ROM), removable media, or any other suitable local or remote memory component. Memory 108 may store various objects or data, including classes, frameworks, applications, backup data, business objects, jobs, web pages, web page templates, database tables, repositories storing services local to the server 102, and any other appropriate information including any parameters, variables, algorithms, instructions, rules, constraints, or references thereto associated with the purposes of the server 102 and its IDE 110.

As illustrated, memory 108 includes a local services repository 134 and a database storing a set of local service ratings 136 associated with at least some of the local and remote services and service compositions. The local services repository 134 may be a database storing certain services and service compositions that may be included in the IDE's 110 search for services. Alternatively, the local services repository 134 may be a metadata index storing information on one or more services, including references describing where the corresponding services are located, as well as information providing information on the inputs, outputs, and other information associated with a particular service. Still further, the local service repository 134 could be any repository, directory, or index providing information and access to one or more services local to the IDE 110. One advantage of having the services local to the IDE 110 may be quicker access to services, as well as the fact that certain services may be known to the IDE 110 without needing to perform web-based or additional searching of other directories. Further, the local services repository 134 may, in some cases, store or contain versions of one or more services used in and/or integrated into one or more stored service compositions.

Illustrated memory 108 further includes a set of local ratings 136 associated with one or more local or remote services and/or service compositions. The set of local ratings 136 can represent feedback provided by one or more developers or users associated with the IDE 110 with regard to one or more services or service compositions. Once a service or service composition is used in a service composition, the corresponding developer or user may provide a personal ranking of the service or service composition, using any number of criteria to determine the ranking, both subjective and objective. The ratings 136 provided by a particular user or developer may be employed by the service search module 130 and filter engine 132 in order to determine the relative ranking and filtering of one or more services and/or service compositions returned in response to any service searches. The set of local ratings 136 may be updated by a user or developer explicitly providing a rating for a service or service composition, while in other instances, the local ratings may be updated based on a particular user or developer action or inaction. For example, when a particular service or service composition returned with a set of suggested services and/or service compositions is selected, the selection of that particular service or service composition may increase the rating of the selected particular service or service composition, while decreasing the relative rating of the unselected services and/or service compositions included in the results set. The set of local ratings 136 may be listed or stored as any type of value, including a range of values (*e.g*., 1 to 5), a star amount, or any other suitable value. In some instances, the set of local ratings 136 may include individual entries for a plurality of services and/or service compositions associated with multiple developers or users, while in other instances, the set of local ratings 136 may include one rating value for each of the plurality of services and/or service compositions included therein. In some instances, the set of local ratings 136 may be associated only with those services included in the repository of local services 134, while in other instances, the ratings may be associated with one or more remotely stored or located services and/or service compositions.

The illustrated environment of FIGURE 1 also includes one or more clients 152. Each client 152 may be any computing device operable to connect to or communicate with at least the server 102 via the network 150 using a wireline or wireless connection. Further, as illustrated in FIGURE 1, client 152 includes a processor 156, an interface 160, a graphical user interface (GUI) 168, a browser 164, and a memory 162. In general, client 152 comprises an electronic computer device operable to receive, transmit, process, and store any appropriate data associated with the environment 100 of FIGURE 1. It will be understood that there may be any number of clients 152 associated with, or external to, environment 100. For example, while illustrated environment 100 includes one client 152, alternative implementations of environment 100 may include multiple clients communicably coupled to the server 102, or any other number of clients suitable to the purposes of the environment 100. Additionally, there may also be one or more additional clients 152 external to the illustrated portion of environment 100 that are capable of interacting with the environment 100 via the network 150. Further, the terms "client" and "user" may be used interchangeably as appropriate without departing from the scope of this disclosure. Moreover, while each client 152 is described in terms of being used by a single user, this disclosure contemplates that many users may use one computer, or that one user may use multiple computers.

The GUI 168 associated with client 152 comprises a graphical user interface operable to, for example, allow the user of client 152 to interface with at least a portion of the IDE 110 for any suitable purpose, such as creating, preparing, modifying, developing, and interacting with at least the IDE 110, as well as viewing and accessing applications under development, services and/or service compositions to be integrated into a service composition, and any other suitable application. Generally, the GUI 168 provides the particular user with an efficient and user-friendly presentation of business data provided by or communicated within the system. The GUI 168 may comprise a plurality of customizable frames or views having interactive fields, pull-down lists, and buttons operated by the user. For example, GUI 168 may provide interactive elements that allow a user to enter or select services, service compositions, or connections between services using the IDE 110. The various portions of the IDE 110 may be presented and accessible to the user through GUI 168, such as through the browser 164. The various service compositions and applications modeled and modified by the IDE 110 may be graphically rendered by the IDE 110 and presented in GUI 168, in some instances using the IDE GUI module 114 and its components to generate the graphical view of the underlying service composition and any associated search results. Further, the user may modify various service compositions by working with the IDE 110 and integrating one or more services and/or service compositions into an underlying service composition via GUI 168. More generally, GUI 168 may also provide general interactive elements that allow a user to access and utilize various services and functions of browser 164. The GUI 168 is often configurable, supports a combination of tables and graphs (bar, line, pie, status dials, *etc.*), and is able to build real-time portals, where tabs are delineated by key characteristics (e.g., site or micro-site). Therefore, the GUI 168 contemplates any suitable graphical user interface, such as a combination of a generic web browser, intelligent engine, and command line interface (CLI) that processes information in the platform and efficiently presents the results to the user visually.

As used in this disclosure, client 152 is intended to encompass a personal computer, touch screen terminal, workstation, network computer, kiosk, wireless data port, smart phone, personal data assistant (PDA), one or more processors within these or other devices, or any other suitable processing device. For example, each client 152 may comprise a computer that includes an input device, such as a keypad, touch screen, mouse, or other device that can accept user information, and an output device that conveys information associated with the operation of the server 102 (and IDE 110) or the client 152 itself, including digital data, visual information, the browser 164, or the GUI 168. Both the input and output device may include fixed or removable storage media such as a magnetic storage media, CD-ROM, or other suitable media, to both receive input from and provide output to users of client 152 through the display, namely, the GUI 168.

The other illustrated portions of the client 152, including the processor 156, the interface 160, and the memory 162, may generally be similar to those described in server 102, although alternative implementations of one or more of these components may be used in some instances. For example, the interface 160 may comprise logic encoded in software and/or hardware in a suitable combination and operable to communicate with the network 150. More specifically, the interface 160 may comprise software supporting one or more communication protocols associated with communications such that the network 150 or interface's hardware is operable to communicate physical signals within and outside of the illustrated environment 100. Processor 156, while illustrated as a single processor, may be implemented as two or more processors in some instances. The processor 156 may be a central processing unit (CPU), a blade, an application specific integrated circuit (ASIC), a field-programmable gate array (FPGA), or another suitable component. Generally, the processor 156 executes instructions and manipulates data to perform the operations of client 152 and the functionality associated with the browser 164. In one implementation, the client's processor 156 executes the functionality required to generate and send requests and instructions from the client 152 to server 102, as well as the functionality required to perform the other operations of the client 152. Memory 162 may be used for storing data and program instructions, and may include any memory or database module and may take the form of volatile or non-volatile memory including, without limitation, magnetic media, optical media, random access memory (RAM), read-only memory (ROM), removable media, or any other suitable local or remote memory component.

Illustrated browser 164 may be any suitable application that may be used to access web pages, web-based applications, and all or a portion of the IDE 110. In some instances, the GUI 168 may be associated with some or all of the browser 164,with the browser's corresponding use limited to interactions with the IDE 110. In particular, the browser 164 and the GUI 168 may be used to present the client-based perspective or visualization of the IDE 110, and may be used to view and navigate through and within the IDE 110. Additionally, the browser 164 may be used to view and navigate web pages located both internal and external to the server 102, some of which may be associated with the IDE 110. For purposes of the present disclosure, the GUI 168 may be a part of or the entirety of the visualization associated with the browser 164, while also merely a tool for displaying the visual representation of the client 152 and the IDE's 110 actions and interactions. In some instances, the GUI 168 and the browser 164 may be used interchangeably, particularly when the browser 164 represents a dedicated client application associated with the IDE 110.

FIGURE 1 further illustrates several components existing in the set of cloud-based services and information 180. The set of cloud-based services and information 180 comprises shared resources, software, and information provided to server 102 and client 152 on-demand. In some instances, some or all of the functionality described in connection with the IDE 110 may also be implemented in or with the set of cloud-based services and information 180, such that the IDE 110 comprises a cloud-based, on-demand service. In general, the various components of the set of cloud-based services and information 180 may communicate with each other and the non-cloud-based components of environment 100 over application programming interfaces (APIs) and/or through the use of web services. In some instances, each component in the set of cloud-based services and information 180 may be considered a cloud-based application or service.

In the present disclosure, the set of cloud-based services and information 180 includes a community feedback system 182 and a cloud-based service repository 174. The cloud-based service repository 174 may be any database or repository available on the cloud storing one or more services 178 accessible to developers, users, and applications for incorporation and integration into a particular service composition. As illustrated, more than one service repository 174 may be included in the set of cloud-based services and information 180. In some instances, each cloud-based service repository 174 may store or reference services associated with a particular industry, market, service type and/or functionality, service provider, and/or any other suitable division. Additionally, different service repositories 174 (or even different services 178 within a particular repository 174) may be accessible to different subsets of developers, users, and applications based on any suitable criteria or authorization scheme. For example, certain service repositories 174 may only be accessible to individuals working on development systems authenticated to be associated with a particular entity or set of entities. Alternatively, different service repositories 174 may store or reference services 178 that are compatible with different types of applications, such that only compatible applications may be able to employ the services 178 therein. Further, the cloud-based service repositories 174 may be included in some or all of the searches performed by the service search module 130 to identify and return one or more suggested services or service compositions to be potentially associated with a service composition in the IDE 110.

The community feedback system 182 illustrated in the set of cloud-based services and information 180 comprises a system for allowing communities of users and developers to combine their collective knowledge and experience with one or more services and/or service compositions in order to assist the service search module 130 and the filter engine 132 to identify the best set and ranking of suggested services and service compositions to return. The community feedback system 182 may be communicably coupled (via network 150) to the IDE 110 (as well as other systems performing similar functions, including other IDEs) such that the community's ratings can be used by each developer and user when considering the services and service compositions with which to integrate into a particular underlying service composition. In some instances, the community feedback system 182 may receive ratings from the IDE 110 at any point during a service composition's development, including after a particular service or service composition has been integrated into an underlying service composition. Additionally, the IDE 110 may also include functionality for requesting a rating or review of a selected service from developers and users after the integration has been made in order to provide additional input into the community feedback system 182.

As illustrated, the community feedback system 182 includes a service ratings repository 186 for storing information associated with ratings associated with particular services and/or service compositions. In some instances, community feedback may be received from outside the IDE 110, such as through a website or web page associated with the community feedback system 182. In some instances, the community feedback system 182 may also perform operations to assist in the categorization and generation of metadata associated with a particular service or service composition, such as by collecting at least a portion of information related to the underlying service compositions and corresponding service composition contexts in which a particular service or service composition is used or suggested. For instance, the community feedback system 182 may collect the industry, application, or other information from the application context to provide additional information as to how particular services or service compositions are used in order to provide additional information and background on various services. In some instances, developers and users may provide the information directly to the community feedback system 182, where that information can be stored with the corresponding ratings in the service ratings repository 186 and used when filtering a particular set of service search results. In some instances, the community feedback system 182 may be associated with the set of local ratings 136 such that information stored in the set of local ratings 136 is incorporated or added to the rating in the set of service ratings 186. In general, the community feedback system 182 allows large groups of developers and users to share information regarding various services and service compositions, and further, allows the IDE 110 and its various components to rank and filter results based on the community's input and ratings.

While FIGURE 1 is described as containing or being associated with a plurality of elements, not all elements illustrated within environment 100 of FIGURE 1 may be utilized in each alternative implementation of the present disclosure. For example, although FIGURE 1 depicts a server-client environment implementing the IDE 110 at server 102 that can be accessed by client 152, in some implementations, server 102 is accessed by a developer or user working directly at the server 102 to work with the IDE 110. Further, although FIGURE 1 depicts a server 102 external to network 150, servers may be included within the network 150 as part of a cloud computing network solution, for example. Additionally, one or more of the elements described herein may be located external to environment 100, while in other instances, certain elements may be included within or as a portion of one or more of the other described elements, as well as other elements not described in the illustrated implementation. Further, certain elements illustrated in FIGURE 1 may be combined with other components, as well as used for alternative or additional purposes, in addition to those purposes described herein.

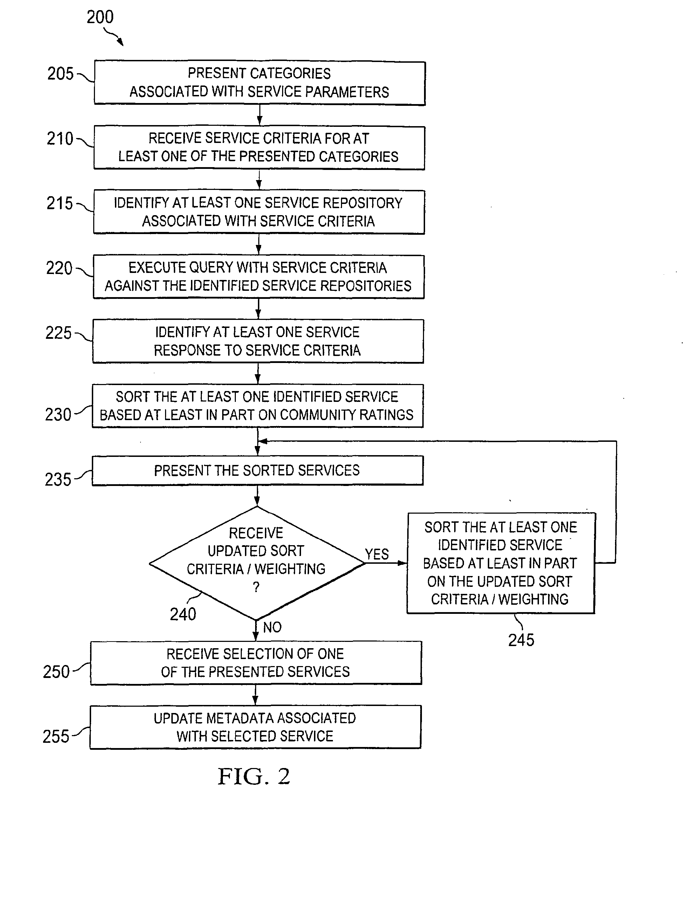

FIGURE 2 is a flowchart illustrating one particular implementation of an example process 200 for providing smart searches for services and service compositions based at least in part on community ratings associated with a set of services. For clarity of presentation, the description that follows generally describes method 200 in the context of environment 100 illustrated in FIGURE 1. However, it will be understood that method 200 may be performed, for example, by any other suitable system, environment, or combination of systems and environments, as appropriate.

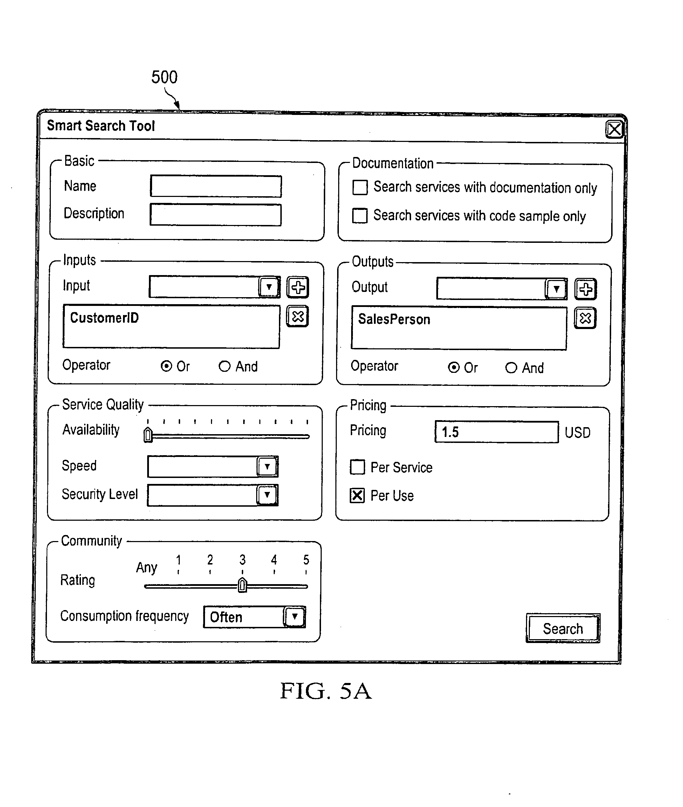

Method 200 of FIGURE 2 provides a flowchart for an example implementation of the smart search tool described above. In combination with the flowchart, the example screenshots of FIGURES 5A-C assist in the description of the example implementation.

At 205, a set of categories associated with one or more service parameters is presented. In one instance, the presentation of categories may be in a window or GUI associated with an IDE, with the set of categories being presented to a user interacting with the IDE at a client device. Further, the set of categories may be presented within a box, screen, or chart with a plurality of available input fields and other input elements that allow a developer to define one or more service parameters for a particular service or service composition. At 210, parameters for at least one of the presented categories are received. In some instances, the parameters may be provided by a user or developer according to the needs for a particular service or service composition. In some instances, some of the parameters can be used primarily for ranking the set of search results, as opposed to identifying the service parameters to search. In some instances, one or more of the search parameters may be initially set at a default value.

FIGURE 5A illustrates an example smart search box 500, and includes various types of categories for service parameters and criteria, including inputs for providing a service (or service composition) name and description, a decision as to whether the services searched include documentation and/or code samples, one or more inputs and/or outputs for the service (including Boolean operators internal to each set), service quality information and ranking, pricing information on the service, and community-based rating and consumption information. In one example, the smart search box 500 may be presented in a window adjacent to a service composition editor window, or the smart search box 500 may be presented on top of, or overlayed upon, a service composition editor window. As illustrated in FIGURE 5A, the initial search parameters defined by the user include "CustomerlD" as the service input and "SalesPerson" as the service output, with a pricing of $1.50 per use, a community rating of at least 3 (out of 5), and a community consumption frequency of "Often". Once the search parameters are defmed, the user or developer can activate the search by selecting the "Search" button, or otherwise indicating the search parameters to be executed.

Returning to 215 of FIGURE 2, once the set of parameters is defined, at least one service repository associated with the set of parameters, and the search in general, is identified. In some implementations, each IDE may be associated with a predefined set of service repositories, such that the predefined set of repositories represents the identified repositories associated with the smart search. In other instances, one or more of the service repositories may be identified based on, for example, the service parameters received at 210, information associated with one or more services or service compositions already included in a project or within the IDE, or information associated with a user or developer requesting the search. For example, if service repositories are located within a cloud-based network, identifying the at least one service repository may include determining one or more of the service repositories to which the corresponding user or developer has access. Alternatively, the smart search box may include inputs allowing the user or developer that selected the service parameters to also define which service repositories are to be included in the search. Further, a set of default service repositories may be used when no specific repositories are defined. In some instances, a first set of service repositories may be identified at 215. If fewer than a predefined number of search results are found in the first set of service repositories, a second set of service repositories may also be identified for further searching. In those instances, the first set of service repositories may be one or more service repositories local to the smart search tool, while the second set of service repositories may be one or more remotely located service repositories, such as those located in a cloud-based environment.

After the service repositories are identified, a service search query corresponding to the received service parameters is executed against the identified service repositories at 220. The service search query may be generated by any appropriate methods, including the generation of a SQL-based query. The service search queries can be generated to be compatible with the identified service repositories. Alternatively, the service repositories may be capable of interpreting a query and converting it into a format suitable for accessing the information and services stored or referenced therein. In instances where two or more service repositories are identified at 215, multiple queries may be generated as required by the service repositories. For example, a first query may be generated in a standard SQL format, while a second query may be generated in a SPARQL format to allow searching of an RDF-compliant service repository. Once the service search query or queries are generated, the query or queries are executed against the corresponding identified service repositories to return a set of search results comprising one or more services and/or service compositions matching or corresponding to the service parameters received at 210.

Based on the returned search results, at least one service or service composition responsive to the received service parameters is identified at 225. In some instances, a large number of search results may be returned and identified. At 230, the search results are sorted. As illustrated in FIGURE 2, the search results are sorted based at least in part on the community ratings associated with the at least one identified service or service composition. In some examples, including the example illustrated in FIGURE 5A, the community rating may be an explicit parameter included in the search parameters. Additionally, the community rating may be factored into the sorting of the search results. Specifically, if members of the community similar to the searching user or developer (e.g., individuals within the same organization, industry, or entity; individuals developing similar applications and service compositions, etc.) use a particular service or service composition more often, as compared to another service or service composition, or have provided relatively higher ratings to the particular service or service composition, the search results can be sorted based at least in part on this information. Additionally, the search results can be sorted based on other parameters, including those explicitly identified in the service parameters, a corresponding matching rating based on how closely each search result matches the search parameters, or on whether a search result comprises a single responsive service or a service composition comprising two or more services. Any suitable criteria can be used to sort the set of at least one identified service or service composition.

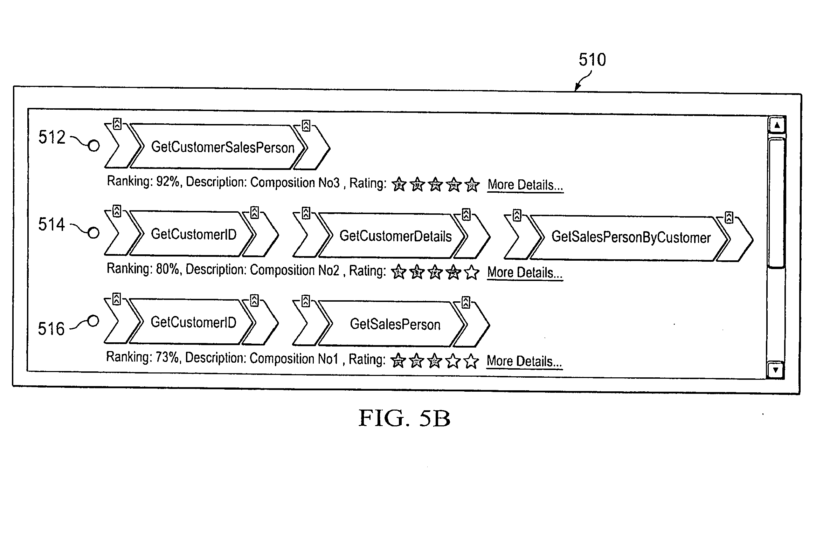

At 235, the sorted set of at least one identified services is presented. In some instances, the sorted set of services from the search may be presented in place of the smart search box providing the categories of search parameters. In other instances, the sorted set of services can be presented adjacent to a service composition editor window, or the search results can be presented on top of, or overlayed upon, the service composition editor window. As illustrated in FIGURE 5B, at least a portion of the search results can be presented in a search results window 510. In the illustrated example, the top three services and service compositions (512, 514, and 516) responsive to the search are presented, with additional services and service compositions presented off-screen below. In the present example, the top-ranked result 512 according to the sort operation of 230 is a single service result comprising the "GetCustomerSalesPerson" service with a community rating of five stars and a ranking of 92%. The second-ranked result 514 is a service composition comprising three distinct services (a "GetCustomerlD" service, a "GetCustomerDetails" service, and a "GetSalesPersonByCustomer" service), with a community rating of four stars and a ranking of 80%. The third-ranked result 516 is a service composition comprising two distinct services (a "GetCustomerID" service and a "GetSalesPersonID" service), with a community rating of three stars and a ranking of 73%. The primary sort parameter in the illustrated example was the number of services included in the search result. However, the relative community ratings of the second-ranked result 514 and the third-ranked result 516 affected the search results such that the three-service service composition 514 was determined to be a better match with the search criteria than the two-service service composition 516. Additional factors and sort criteria can be used when determining the ranking or ranking score of a particular search result. For example, in the illustrated example, the community's relatively higher rating for the search result 514 offset the fact that search result 516 had fewer services with the service composition.

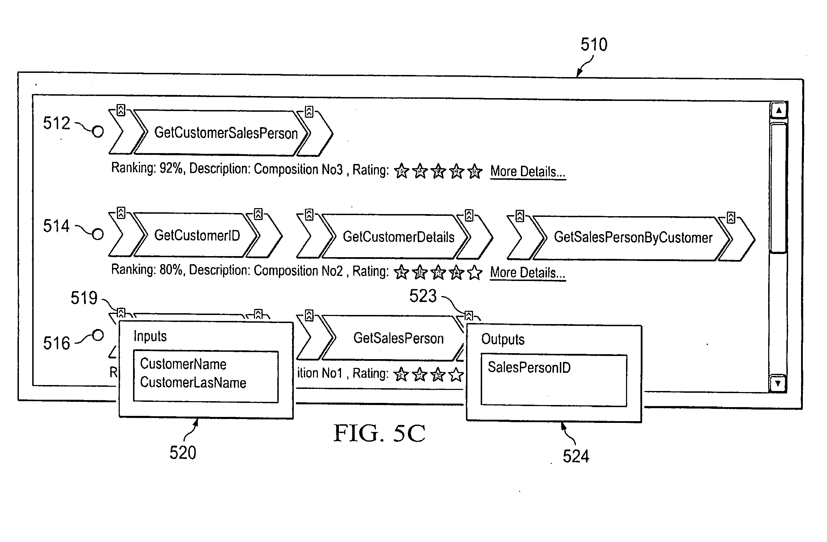

FIGURE 5C illustrates an additional feature of the smart search and search results presentation. The presentation within the search results, for each service within a particular service composition, can include interactive UI elements that allow the developer or user performing the search to identify additional information about any of the results. As shown in FIGURE 5C, UI elements 519 and 523 associated with the "GetCustomerID" service and the "GetSalesPerson" service of search result 516 have been activated. By activating these UI elements (519 and 523), the pop-up boxes 520 and 524 are presented. As illustrated, the first UI element (519) is associated with the inputs of the "GetCustomerID" service, and illustrate what inputs are included for the "GetCustomerID" service to operate. Similarly, the second UI element (523) is associated with output of "GetSalesPerson" service to show the corresponding outputs provided after the service is executed. By viewing both the inputs associated with the first service in the service composition and the output associated with the second (and last) service in the service composition, the developer can immediately understand what inputs and outputs are associated with the particular search result 516. Similar interactions with the corresponding elements of search results 512 and 514 can be available to assist in the selection of a particular search result. Additionally, each search result can include a "More Details" button or tab that can be activated in order to view additional information associated with the search result. By allowing the interactivity with the search results, developers and users of the smart search tool can immediately understand the requirements and impact of using a particular service or service composition within an application.

Returning to FIGURE 2, a determination is made at 240 as to whether an updated set of sort criteria or search result weighting is received. In some instances, the developer or user viewing the search results may choose to modify the primary (and other) search criteria. If updated search criteria are received, method 200 continues at 245, where the set of at least one identified service is sorted according to the updated sort criteria or weighting. Once the updated sort is complete, the sorted set of identified services is presented again at 235. If no additional or updated sort criteria are received, method 200 continues at 250.

At 250, a selection of one of the presented services or service compositions from the search results can be received. In some instances, selection may be identified based on a dragging-and-dropping of a particular search result from the search results window into a service composition editor window, where the corresponding service or service composition will then appear and be available for editing. Alternative methods of receiving a selection of a particular search result can be used in particular implementations, including receiving an activation of a UI element presented with a particular search result indicating selection of the corresponding search result.

Once a particular service or service composition is selected, metadata associated with the selected service or service composition is updated at 255. In some instances, the updated metadata can include information stored in a community feedback system regarding the usage or selection of the selected service composition, as well as information associated with the context in which the selected service composition is used. Additionally, the fact that the selected service composition was selected instead of another search result can be stored in order to update the relative popularity and usage information of both the selected service composition and the non-selected service composition. Further, any ratings received by the developer or user can be added to ratings received from other users. The updated metadata and information returned at 255 can be used during future searches performed for both the current developer and other developers to provide more detailed and community-oriented results. In other instances, the metadata may be associated only with information corresponding to the current developer, and may affect only future searches performed by that developer.

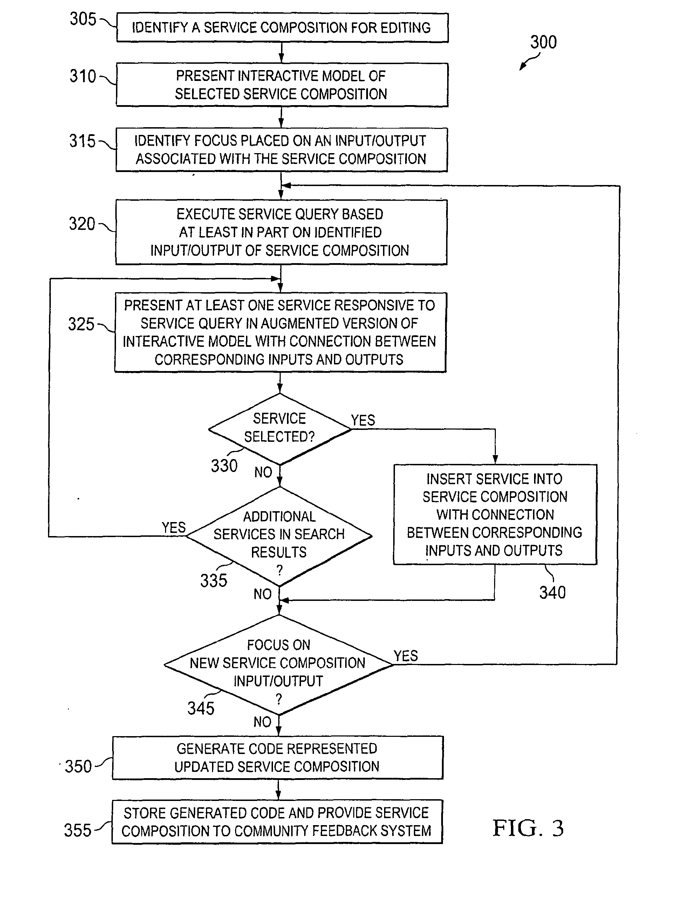

FIGURE 3 is a flowchart of an example process 300 for editing a particular service composition using an auto-suggestion tool based on an input and/or output included in the service composition being edited. For clarity of presentation, the description that follows generally describes method 300 in the context of environment 100 illustrated in FIGURE 1. However, it will be understood that method 300 may be performed, for example, by any other suitable system, environment, or combination of systems and environments, as appropriate.

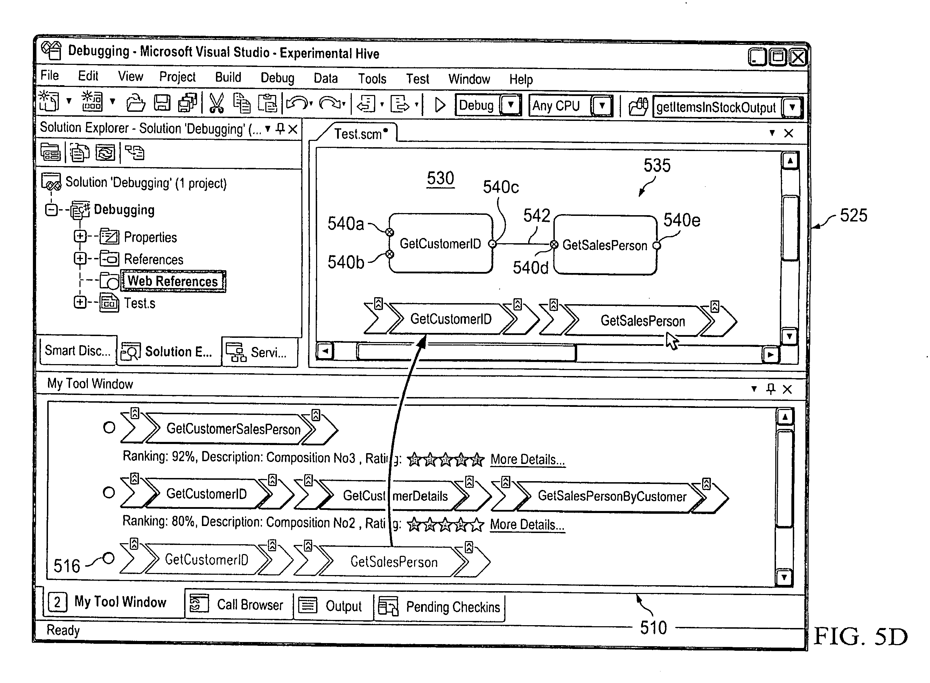

At 305, a service composition is identified for editing. In some instances, the service composition can be identified based on a prior smart search as described by method 200 of FIGURE 2, where identifying the service composition is based upon the received selection of one of the presented services or service compositions from the search results at 250 of FIGURE 2. Alternatively, a particular service composition can be generated manually by combining one or more services. In still other instances, a service composition can be identified by a selection received from a developer based on a set of stored service compositions. An interactive model of the identified service composition is then presented at 310. In some instances, the interactive model of the identified service composition can be presented in a GUI associated with an IDE used to modify one or more service compositions. Further, the GUI may include a window or portion dedicated to presenting, editing, and modifying service compositions. For example, FIGURE 5D illustrates a service composition editor window 530 as a portion of the overall IDE 525, where the IDE 525 also includes the search results returned by the smart search illustrated in FIGURES 5A-C. In the illustrated example, search result 516 (described above) is selected by the developer interacting with the IDE 525, and dragged-and-dropped onto the service composition editor window 530 for further editing, where the interactive model 535 of the service composition is presented (according to 310 of method 300). In some instances, the services making up a service composition can be illustrated as nodes on the associated service in the interactive model 535, with connections between the inputs and outputs of the service composition illustrated by connectors or other visual elements.

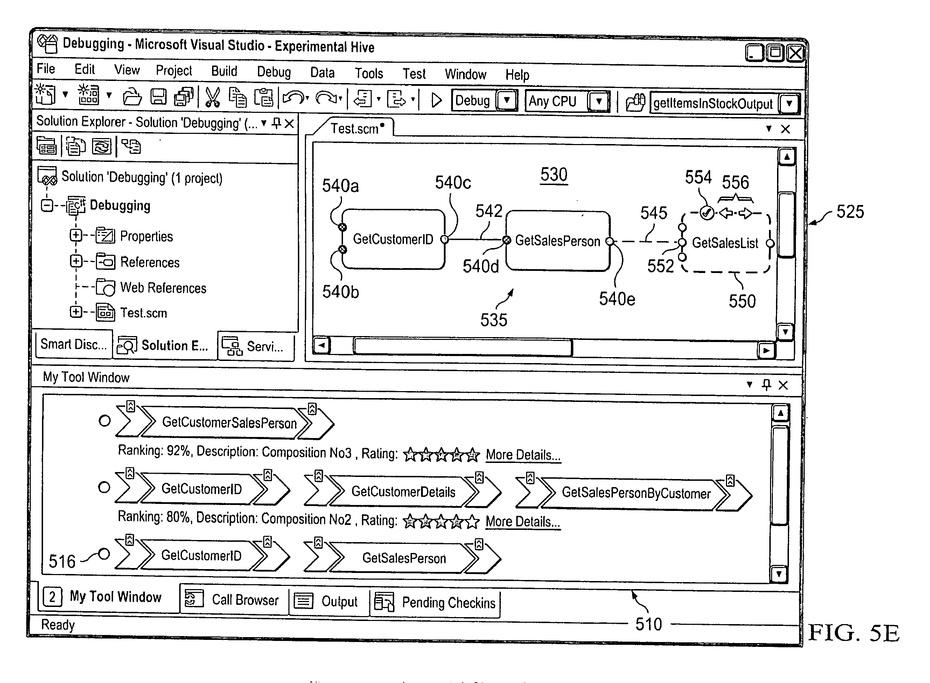

Returning to FIGURE 3, at 315 the focus on a particular input or output associated with the service composition of the presented interactive model is identified. For example, a node or UI element associated with the input or output of a service within the service composition can be included in the presentation of the interactive model. The focus on a particular input or output of one of the services within the service composition may be based upon a received mouse over gesture, click gesture, or any other suitable actions for selecting a focused service input or output within the interactive model. FIGURE 5D illustrates example nodes 540a-e associated with the inputs and outputs of the services within the service composition of the interactive model 535. Additionally, the interactive model 535 illustrates the connections between the services of the service composition, including the connection 542 between the output 540c of the "GetCustomerID" service and the input 540d of the "GetSalesPerson" service. Any of the inputs or outputs of the services may be selected for focus by the developer or user. As illustrated in FIGURE 5E, node 540e associated with the output of the "GetSalesPerson" service - a value for a "SalesPersonID" as illustrated by the information viewed in FIGURE 5C - is focused upon.

Returning to FIGURE 3, at 320 a service search query based, at least in part, on the identified or focused upon input or output of the service composition, is executed. In general, the auto-suggestion method 300 may generate service search queries based on at least the selected input or output of the service composition, as well as any number of other factors related to the selected input or output, including the particular service associated with the selected input or output, the overall service composition and its context, and the developer interacting with the service composition editor tool. For example, where the selected element is a service's output, the service search query parameters can specify services or service compositions with inputs matching the selected output, as well as other criteria or parameters related to the modeled service or service composition. For example; the service search query may include criteria to specify services and/or service compositions related to an industry or application associated with the service composition being edited. Further, developer-related information may be included in the query in order to return services and service compositions accessible to the developer, as well as of likely interest to the developer. Although not illustrated in FIGURE 3, 320 may be performed by a query generator associated with the IDE, where the query generator retrieves (or itself collects) information associated with the selected output and service composition context prior to generating a query based on at least a portion of that retrieved information. Similar to method 200, multiple service search queries may be defined in order to be compatible with the type of (and information within the) service repositories being searched.

In addition to generating the service search queries, executing the service query at 320 may also include identifying at least one service repository to which the generated query should be executed against (similar to the operations of 215 in FIGURE 2). In one instance, a predefined set of service repositories may be associated with the IDE and accessed with the query, while in other instances, at least one service repository may be identified based on the selected input or output, the service composition context, the developer, and any other information accessible to the IDE. Once the appropriate service repositories are identified, the service search query is executed against those identified service repositories. Upon executing the service search query, a set of at least one search result comprising services and/or service compositions responsive to the service search criteria or parameters is returned.

At 325, at least one service or service composition returned by the service search query is presented in an augmented version of the interactive service composition model. In some instances, the connections between the selected input or output and the input or output of the at least one service returned by the query are illustrated within the augmented version of the interactive service composition model. In some instances, and regardless of the number of services or service compositions responsive to the service search query, only a single service or service composition may be initially presented in the augmented version of the interactive service composition model. Alternatively, a subset of two or more services or service compositions responsive to the service search query may be presented in the augmented version of the model. Before the at least one responsive service or service composition is presented, the entire set of responsive search results can be sorted based on one or more sort criteria, including information retrieved from a set of community ratings and information on the responsive services and service composition based on use or non-use from other developers and/or users. The sorting operations may in some instances be similar to those described in 230 of FIGURE 2. Alternatively, one or more sort criteria can be specifically defined within the IDE to be used for each suggestion. In some instances, a developer or user receiving the suggested additions can modify or change the sort criteria used in the application, and therefore, change the order of presentation of the responsive services and service compositions. When a single service or service composition is presented, the connection between the selected input or output of the service composition being edited can be shown to be directly connected to the corresponding input or output of the responsive, presented service or service composition.

FIGURE 5E illustrates the augmented version of the interactive service composition model 535 when the top-ranked (based on the sorting operations) service is presented. As described in connection with FIGURE 5D, the selected output of the underyling service composition is the "SalesPersonID" output 540e of the "GetSalesPerson" service. The service search query generated and executed at 320 of FIGURE 3, after sorting, returned the "GetSalesList" service 550 as the top-ranked result. A connection between the "SalesPersonID" output 540e of the "GetSalesPerson" service is connected, via augmented connection 545, to the "SalesPersonID" input 552 of the suggested "GetSalesList" service 550. As illustrated, the "SalesPersonID" input 552 of "GetSalesList" service 550 is one of three inputs to the "GetSalesList" service 550, which in turn provides a single output.

Returning to FIGURE 3, at 330 a determination is made as to whether one of the presented services or service compositions is selected. In some instances, a UI element associated with a presented service or service composition can be activated to indicate a selection. As illustrated in FIGURE 5E, a checkbox 554 is provided for the developer to indicate the selection of the presented "GetSalesList" service 550. If a selection is made or received, method 300 continues at 340. However, if no selection is made, method 300 continues to 335.

At 335, a determination is made as to whether additional services or service compositions are included in or available from the search results. If additional services or service compositions are available, UI elements may be provided in the augmented version of the interactive service composition model to allow the developer or user to navigate through the search results. If no additional services are available based on the focused input or output, method 300 moves to 345. FIGURE 5E illustrates arrow buttons 556 which allow the developer interacting with the service composition model 535 to move between service and service composition search results. If the currently presented service is the top-ranked service from the search results, the arrow buttons 556 may only allow navigation to lower-ranked search results. When a new search result is selected, method 300 returns to 325, where the newly selected service search result is presented, and the augmented version of the interactive service composition model is modified to present the newly selected service and its connections to the underlying service composition model.

When a particular service or service composition from the search results is selected, that service or service composition is then inserted into the underlying service composition along with the connection between the corresponding inputs and outputs of the underlying service composition and the newly inserted service or service composition. In some instances, the previously illustrated augmented version of the interactive service composition model is updated with the newly inserted service or service composition and included as an integrated portion of the updated underlying service composition.

At 345, a determination is made as to whether a new service composition input or output is focused upon. In some instances, one or more of the inputs or outputs focused upon may be associated with a newly inserted (at 340) service or service composition. In other instances, one or more of the other inputs or outputs originally associated with the underlying service composition may be focused upon. If a new service composition input or output is focused upon, method 300 returns to 320 and continues to perform the previously-described operations. If, however, no new service composition input or output is focused on, or information indicating that the editing is complete is received (i.e., an explicit or implicit indication from the developer or user of the IDE), method 300 continues at 350.

At 350, when the edits to the underlying service composition are finalized, program code associated with the edited and updated service composition is generated to allow the updated service composition to be used, such as in a test or production environment. The code generation of 350 may include generating a proxy, or reference, to each of the services included in the updated service composition, as well as a specific class structure defining the overall service composition and the order of operation and interactions between its services. In some instances, the results of the service composition code integration may be presented within a portion of the GUI associated with the IDE. In some instances, the modifications to the program code that occurred as a result of the code generation and service composition integration may be presented in a different color, font, or format within the program code portion of the IDE in order to provide developers and users with the ability to easily visualize any code modifications. In some instances, integrating new services or service compositions into an underlying service composition may be performed by the inherent operations of the IDE. Any other component, whether internal or external to the IDE, may also be used to generate and update the program code associated with the updated service composition.

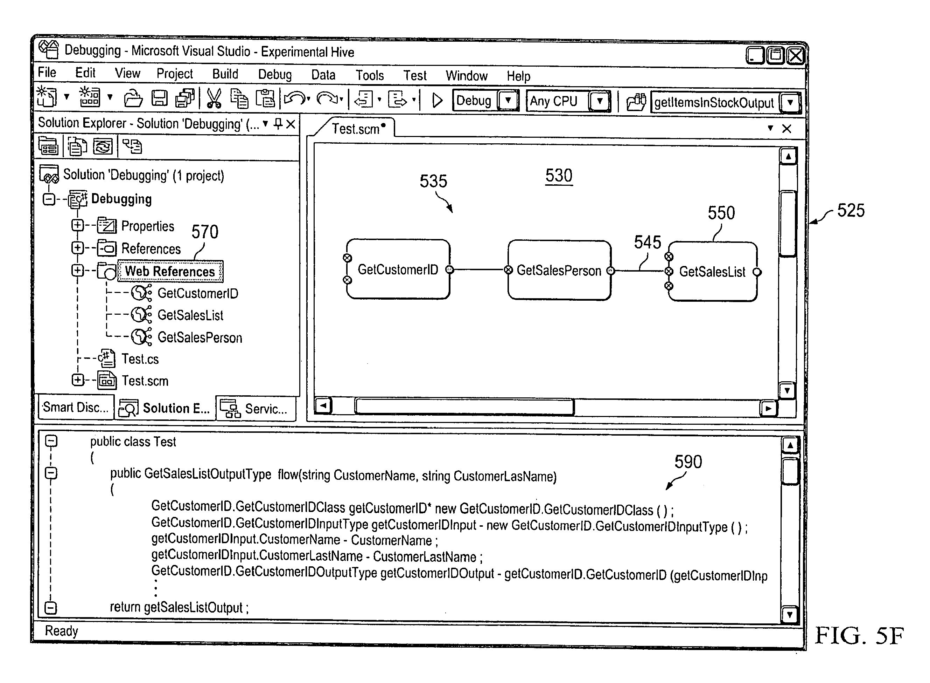

FIGURE 5F provides an example screenshot of an IDE GUI 525 including a updated interactive model 535 illustrating the updated service composition that includes the insertion of the previously selected "GetSalesList" service 550. In addition to the interactive model 535, FIGURE 5F includes a generated set of proxies 570, or web references, associated with each of the services included in the updated service composition. Further, in place of the search results window 510, a service composition code window 585 is presented. In alternative instances, both the search results window 510 and the service composition code window 585 may be presented concurrently. The service composition code window 585, as presented in FIGURE 5F, includes newly generated or updated code 590 associated with the updated service composition 535, and presents information defining the order of, interactions between, and relations of the various service interactions included in the updated service composition. For example, the updated code 590 will include additional information defining the connection 545 (as illustrated) between the "GetSalesPerson" service' output and the "GetSalesList" service's input.

Once the code generation operations of 350 are complete, method 300 continues at 355, where the generated and/or updated service composition and service proxy code are stored for future use. Additionally, the updated service composition (or a reference and/or information to or regarding the updated service composition) may be provided a community feedback system and a cloud-based service repository. By providing information on or a copy of the updated service composition, future searches can include the updated service composition as a search result so that other developers or users can view and employ the updated service composition as appropriate. In most instances, the updated service composition is stored separately from the originally returned service composition and, thus, both the originally returned service composition and the updated service composition can be returned in later searches as separate solutions or responses. Additionally, the updated service composition may be stored locally to the IDE, such as in a local service repository. By sharing updated service compositions with other developers and users, the auto-suggestion feature allows the associated community to benefit from modifications and updates performed by individual developers.

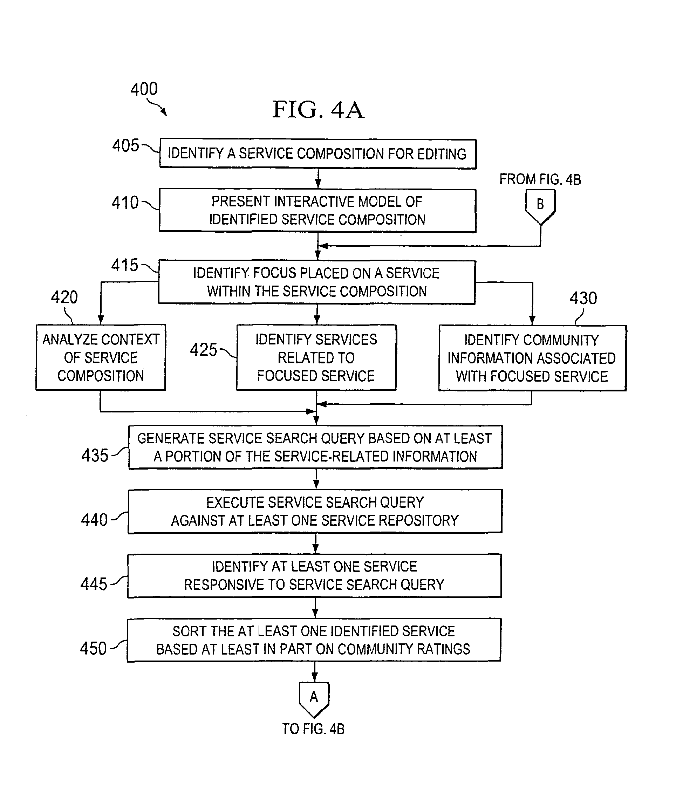

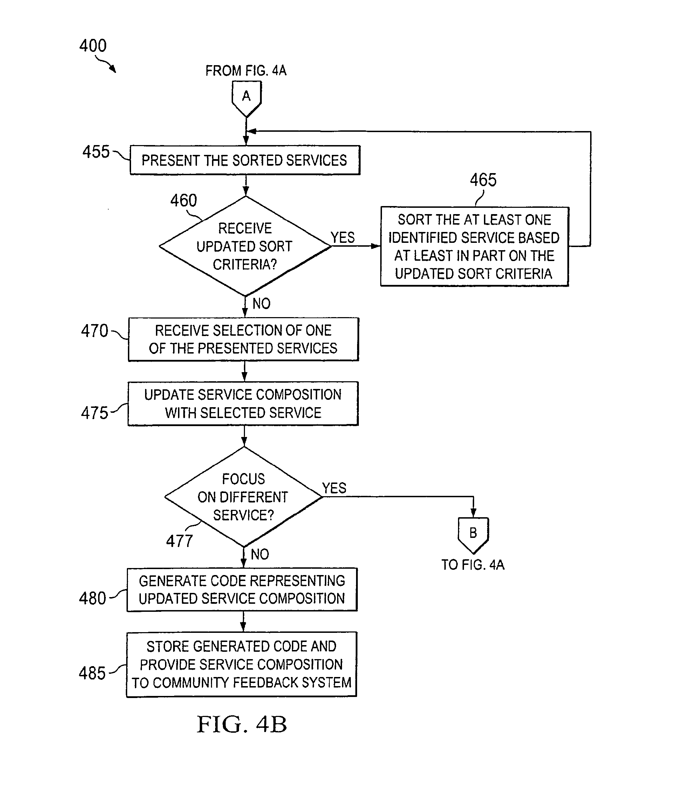

FIGURE 4 is a flowchart of an example process 400 for discovering one or more services or service compositions associated with a selected service within a particular service composition based on a plurality of factors specific to the developer interacting with the particular service composition and on the context of the selected service and its overall service composition. For clarity of presentation, the description that follows generally describes method 400 in the context of environment 100 illustrated in FIGURE 1. However, it will be understood that method 400 may be performed, for example, by any other suitable system, environment, or combination of systems and environments, as appropriate.

Similar to method 300 of FIGURE 3, method 400 begins at 405 with identifying a service composition for editing. In some instances, the service composition can be identified based on a prior smart search, an addition using the auto-suggestion functionality described above in FIGURE 3, or any other suitable method, including the manual selection of a particular service composition. At 410, an interactive model of the identified service composition is presented. In some instances, the interactive model of the identified service composition can be presented in a GUI associated with an IDE used to modify one or more service compositions. Further, the GUI may include a window or portion dedicated to presenting, editing, and modifying service compositions.

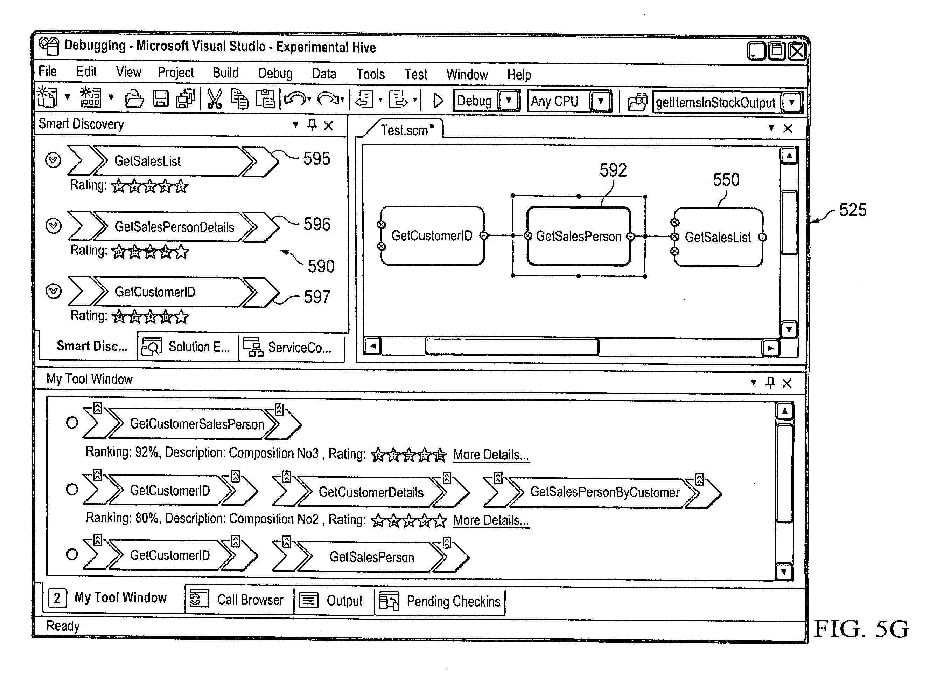

At 415, the focus on a particular service within the service composition of the presented interactive model is identified. In some instances, the focus on a particular service may be identified based on a developer or user action indicating or placing the focus on a particular service, such as a click gesture, a mouse over gesture, or any other suitable action or indication. Alternatively, one of the services may be selected by default. For example, the default service selection may be based upon the particular service composition identified, or the relative location of the services within the identified service composition (e.g., the first service in a service composition). As illustrated in FIGURE 5G, the focus within the interactive service composition is on the "GetSalesPerson" service 592.

Once the focus of the interactive service composition model is identified, the service, its context within the service composition, and community information associated with the focused service are identified at 420, 425, and 430, although additional information and analysis can be performed on the focused service and its related information. At 420, information regarding the context of the service composition as a whole is analyzed, including the type of application, industry, and operations the service composition is associated with. At 425, services related to the focused service are identified. For example, services with inputs and outputs corresponding to the focused service may be identified, as well as services performing similar or related actions that may or may not have inputs and outputs corresponding to the focused service. For example, particular services may be known, listed, or determined to be related based on similar operations, purposes, and/or service types. Based on those relations, one or more services may be identified as related to the focused service. At 430, a set of community information associated with the focused service is identified. For example, information may be identified based on community members or developers who have used the focused service, such as which services or service compositions may have been previously (and in some instances, commonly) used with the service. Additionally, if a collective set of community members or developers has rated the focused service highly, information identifying one or more other highly rated services or service compositions may be retrieved and identified.

After the set of service-related information is gathered and identified (in 420, 425, and 430, as well as any other gathering or identification of service-related information not illustrated in FIGURE 4), a service search query based on at least a portion of the service-related information is generated at 435. Although not illustrated in FIGURE 4, 435 may be performed by a query generator associated with the IDE, where the query generator retrieves (or itself collects) the information associated with the focused service prior to generating a query based on at least a portion of that retrieved information. As described in methods 200 and 300, multiple service search queries may be defined in order to be compatible with the type of (and information within the) service repositories being searched.

At 440, the generated search service query (or queries) is executed against at least one service repository. In one instance, a predefined set of service repositories may be associated with the IDE and accessed with the query, while in other instances, at least one service repository may be identified based on the selected service, its respective inputs and outputs, the overall service composition's context, the developer, and any other information accessible to the IDE. In some instances, at least a portion of the identified service repositories may be local to the IDE, while in other instances, at least a portion of the identified service repositories may be external to the IDE, including service repositories located in a cloud-based network or location. Once the appropriate service repositories are identified, the service search query (or queries) is executed against those identified service repositories. If the identified service repositories require different types of query formats, different query instances in the appropriate formats may be generated.

Upon executing the service search query, a set of at least one search result comprising at least one service and/or service composition responsive to the service search query is identified, or returned, at 445. In some instances, a large number of search results may be returned and identified. At 450, the search results are sorted. As illustrated in FIGURE 4, the search results are sorted based at least in part on the community ratings associated with the at least one identified service or service composition comprising the search results. In some examples, the community rating may be an explicit parameter included in the search parameters. Additionally, the community rating may be factored into the sorting of the search results. Specifically, if members of the community similar to the searching user or developer (e.g., individuals within the same organization, industry, or entity; individuals developing similar applications and service compositions, etc.) use a particular service or service composition more often, as compared to another service or service composition, or have provided relatively higher ratings to the particular service or service composition, the search results can be sorted based at least in part on this information. Additionally, the search results can be sorted based on other parameters, including those explicitly identified in the service parameters, a corresponding matching rating based on how closely each search result matches the search query parameters, or on whether a search result comprises a single responsive service or a service composition comprising two or more services. Any suitable criteria can be used to sort the set of at least one identified service or service composition.

At 455, the sorted set of at least one identified service is presented. In some instances, the sorted set of services can be presented adjacent to a service composition editor window (as illustrated in FIGURE 5G by smart discovery window 590), or the sorted set of services can be presented on top of, or overlayed upon, the service composition editor window. In the illustrated example, the top three services (595, 596, and 597) responsive to the generated service search query are presented. In some instances, additional services and service compositions may be presented in the smart discovery window 590, and may be available by scrolling through the services and service compositions using a corresponding UI element, such as a scroll bar or paging mechanism (not shown in FIGURE 5G). In the illustrated example of FIGURE 5G, the top-ranked result based on the sorting process is the "GetSalesList" service 595. In the present example, the "GetSalesList" service 550 is already a part of the service composition. In some instances, services already included in the service composition may be omitted from, or filtered out of, the returned result list. While only the top three search results and their corresponding community ratings are illustrated in FIGURE 5G, additional information may be presented in the smart discovery window 590. Further, in some instances additional information associated with the each of the search results may be presented by focusing on a particular search result. For example, the service's inputs and outputs, as well as information on pricing, access levels, and other information, may be available.

At 460, a determination is made as to whether an updated set of sort criteria or search result weighting is received. In some instances, the developer or user viewing the search results in the smart discovery window may choose to modify the primary (and other) search criteria. If updated search criteria are received, method 400 continues at 465, where the set of at least one identified service is sorted according to the updated sort criteria or weighting. Once the updated sort is complete, the sorted set of identified services is presented again at 455. If no additional or updated sort criteria are received, method 400 continues at 470.

At 470, a selection of one of the presented services or service compositions from the search results is received. In some instances, the selection may be identified based on a dragging-and-dropping of a particular search result from the smart discovery window into a service composition editor window, where the corresponding service or service composition will then appear and be available for editing and integration into the underlying service composition. Alternative methods of receiving a selection of a particular search result can be used in particular implementations, including receiving an activation of a UI element presented with or corresponding to a particular search result indicating selection of the corresponding search result.

Once the selection is received, the underlying service composition can be updated with the selected service at 475. Alternatively, the selected service can be deleted and removed from the service composition if the developer elects not to include the selected service in the service composition. Updating the service composition with the selected service can include providing one or more connections between the selected service's inputs and/or outputs and the inputs and outputs of one or more of the other services within the service composition. Connections may be between the focused upon service and the selected service, or between the selected service and one of the other services within the service composition. In some instances, the IDE may suggest one or more connections for the selected service once the selected service is selected and added to the service composition editor window.

At 477, a determination is made as to whether another service in the service composition is focused upon. If another service is focused upon, or the if the previously focused upon service is focused away from and then focused back on by the developer, method 400 returns to 415, where the process is repeated. Although not illustrated as such in FIGURE 4, at any time during the execution of method 400 the focus may be removed from the focused service and placed on another service. In those instances, method 400 will return to 415 and restart the analysis portion of the process. If no other service is focused upon, and the IDE receives some indication to finalize the updates to the service composition, method 400 continues at 480.

At 480, when the edits to the service composition and its services are complete, program code associated with the edited and updated service composition (and services therein) is generated to update the service composition. The code generation of 480 may include generating a proxy, or reference, to each of the services included in the updated service composition, as well as a specific class structure defining the overall service composition, defining the order of operation and interactions between the services therein. The code generation process of 480 may be similar to the code generation process of 350 in FIGURE 3. In some instances, the results of the service composition code integration may be presented within a portion of the GUI associated with the IDE, with modifications to the program code occurring as a result of the code generation and service composition integration presented in a different color, font, or format.

At 485, the generated and/or updated service composition and service proxy code, as well as the associated service composition model, are stored for future use. Additionally, the updated service composition (or a reference and/or information to or regarding the updated service composition) may be provided a community feedback system and/or a cloud-based service repository similar to 355 of method 300. Additionally, metadata and information associated with the selected services can also be updated. In some instances, the updated metadata can be stored in the community feedback system and be related to the usage or selection of the particular services in relation to the other presented services or service compositions, thus providing search results reflecting, at least in part, the selections made during execution of method 400. Further, any ratings received by the developer or user can be added to ratings received from other users and stored by the community feedback system. Additionally, the stored updated service compositions can be accessed for later use, both by the creator of the updated service composition, as well as members of the community. The sharing of updated service compositions can be useful in large entities and companies, allowing the work of a single developer to be shared by many others.

The preceding figures and accompanying description illustrate example processes and computer implementable techniques. But environment 100 (or its software or other components) contemplates using, implementing, or executing any suitable technique for performing these and other tasks. It will be understood that these processes are for illustration purposes only and that the described or similar techniques may be performed at any appropriate time, including concurrently, individually, or in combination. In addition, many of the steps in these processes may take place simultaneously, concurrently, and/or in different orders than as shown. Moreover, environment 100 may use processes with additional steps, fewer steps, and/or different steps, so long as the methods remain appropriate.

In other words, although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A computer implemented method performed by one or more processors for automatically discovering at least one service for integration with a service composition, the method comprising the following operations:
identifying a modeled service composition at design time in an integrated development environment (IDE), where the modeled service composition includes at least one service;
receiving a selection of a first service included within the modeled service composition;
collecting a set of information associated with the first service;
searching at least one service repository for a set of services associated with the selected first service, the search based at least in part on the collected set of information associated with the first service; and
presenting at least a portion of the set of services responsive to the search via a graphical user interface (GUI) associated with the IDE.

2. The method of claim 1, wherein
receiving the selection of the first service comprises receiving a selection of an input or output of the first service; and wherein
collecting the set of information associated with the first service includes collecting the selected input or output of the first service, and wherein
searching the at least one service repository for the set of services associated with the selected first service includes searching the at least one service repository for a set of services associated with the selected first service and the selected input or output of the first service, wherein the search is based at least in part on the selected input or output of the first service.

3. The method of claim 1 or 2, further comprising:
receiving a selection of a second service from the presented set of services for integration into the modeled service composition; and
integrating the selected second service into the modeled service composition.

4. The method of any one of the preceding claims, wherein collecting the set of information associated with the first service comprises:
analyzing the modeled service composition for metadata associated with the first service;
analyzing the modeled service composition for metadata associated with at least one other service included within the modeled service composition; and
collecting a set of information comprising a context associated with the modeled service composition.

5. The method of any one of the preceding claims, wherein searching at least one service repository for a set of services comprises generating a service search query based at least in part on a combination of two or more of the following: metadata associated with the first service, metadata associated with at least one other service in the modeled service composition, and the collected set of context information associated with the modeled service composition.

6. The method of any one of the preceding claims, wherein searching the at least one service repository for the set of services associated with the first service comprises:
generating a service search query based at least in part on the collected set of information associated with the first service;
dynamically determining at least one service repository associated with the generated service search query; and
identifying a set of services responsive to the generated service search query from the at least one determined service repository.

7. The method of claim 6, wherein presenting at least a portion of the set of services responsive to the search via the GUI associated with the IDE comprises:
ranking each service of the identified set of services relative to the other services of the identified set of services based on at least a community rating associated with each service received from a community-based feedback system; and
presenting a predefined number of the identified set of services in descending order based on a relative ranking of each service.

8. The method of claim 7, further comprising:
receiving a selection of a second service from the presented set of services for integration into the modeled service composition, where receiving the selection of the second service from the presented set of services for integration into the modeled service composition comprises receiving a selection of one of the presented set of services; and
integrating the selected second service into the modeled service composition, wherein integrating the selected second service into the modeled service composition comprises:
adding the selected second service to the modeled service composition to create an augmented version of the modeled service composition, including at least one connection between an input or output of at least one service within the modeled service composition and at least one input or output of the selected second service; and
automatically updating program code associated with the modeled service composition to correspond to the augmented version of the modeled service composition.

9. The method of any one of the preceding claims, wherein each service comprise a single service or a combination of two or more services.

10. A computer program product encoded on a tangible storage medium, the product comprising computer readable instructions for causing one or more processors to perform operations according to the method of any one of the preceding claims.

11. A computer system for automatically discovering at least one service for integration with a service composition, the system comprising:
an identification module for identifying a modeled service composition at design time in an integrated development environment (IDE), where the modeled service composition includes at least one service;
a receiver for receiving a selection of a first service included within the modeled service composition;
a collector for collecting a set of information associated with the first service;
a searcher for searching at least one service repository for a set of services associated with the selected first service, the search based at least in part on the collected set of information associated with the first service; and
a presenter for presenting at least a portion of the set of services responsive to the search via a graphical user interface (GUI) associated with the IDE.
